(19) **Europäisches Patentamt / European Patent Office / Office européen des brevets**

(11) **EP 4 568 200 A1**

(12) **EUROPEAN PATENT APPLICATION**
published in accordance with Art. 153(4) EPC

(43) Date of publication:
**11.06.2025 Bulletin 2025/24**

(21) Application number: **22953691.7**

(22) Date of filing: **05.08.2022**

(51) International Patent Classification (IPC):
**H04L 27/00** (2006.01)

(52) Cooperative Patent Classification (CPC):
**H04L 27/00**

(86) International application number:
**PCT/CN2022/110710**

(87) International publication number:
**WO 2024/026891 (08.02.2024 Gazette 2024/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **MU, Qin**
  **Beijing 100085 (CN)**
• **QIAO, Xuemei**
  **Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **ARTIFICIAL INTELLIGENCE (AI)-BASED CHANNEL ESTIMATION METHOD AND APPARATUS**

(57) Disclosed in embodiments of the present disclosure are an artificial intelligence (AI)-based channel estimation method and apparatus, applicable to the technical field of communications. The method implemented by a terminal device comprises: determining a channel estimation model and a first format requirement of input data of the channel estimation model; receiving a PDSCH sent by a network side device, the PDSCH being used for carrying data and a DMRS; determining model input data according to the first format requirement, the number of resources of the PDSCH, the RE position of the data, and the DMRS; and determining a candidate channel estimation result according to the model input data and the channel estimation model. Therefore, the terminal device can perform, by using a unified channel estimation model, channel estimation under different DMRS configurations, without maintaining a plurality of channel estimation models, such that the complexity can be reduced, and the overhead can be reduced.

determining a channel estimation model, and a first format requirement of input data of the channel estimation model — S21

receiving a PDSCH sent by a network side device, the PDSCH is configured to carry data and DMRS signal — S22

determining a model input data according to the first format requirement, a number of resources of the PDSCH, an RE position of the data, and the DMRS signal — S23

determining a candidate channel estimation result according to the model input data and the channel estimation model — S24

FIG. 2

**Description**

**FIELD**

The present disclosure relates to the field of communication technology, and in particular to a method and apparatus for a channel estimation based on artificial intelligence (AI).

**BACKGROUND**

An application scenario of AI (Artificial Intelligence) is an application of an AI algorithm to a channel estimation, and the channel estimation depends on a configuration of a DMRS (Demodulation Reference Signal).
In related art, the DMRS has a variety of different configurations, and different DMRS configurations result in different input dimensions, and different input dimensions may further result in the need for different AI-based channel estimation models under different configurations, resulting in the need for the terminal device to maintain a plurality of AI-based channel estimation models, which can increase complexity and overhead of maintenance, and is a problem that needs to be addressed urgently.

**SUMMARY**

Embodiments of the present disclosure provide a method and apparatus for a channel estimation based on artificial intelligence (AI), and a terminal device can use a unified channel estimation model for the channel estimation under different DMRS configurations without maintaining a plurality of channel estimation models, which can reduce complexity and overhead.
In a first aspect, embodiments of the present disclosure provide a method for a channel estimation based on artificial intelligence (AI), the method is performed by a terminal device, and the method includes: determining a channel estimation model and a first format requirement of input data of the channel estimation model; receiving a physical downlink shared channel (PDSCH) sent by a network side device, in which the PDSCH is configured to carry data and a DMRS signal; determining model input data according to the first format requirement, the data and the DMRS signal; and determining a candidate channel estimation result according to the model input data and the channel estimation model.
In the technical solution, the terminal device determines a channel estimation model and a first format requirement of input data of the channel estimation model; receives a PDSCH sent by a network side device, the PDSCH being configured to carry data and a DMRS signal; determines model input data according to the first format requirement, the data and the DMRS signal; and determines a candidate channel estimation result according to the model input data and the channel estimation model. Thus, the terminal device can use a unified channel estimation model for channel estimation under different DMRS configurations without maintaining a plurality of channel estimation models, which can reduce complexity and overhead.
In a second aspect, embodiments of the present disclosure provide another method for a channel estimation based on artificial intelligence (AI), the method is performed by the network side device, and the method includes: determining a channel estimation model; sending configuration information to a terminal device, in which the configuration information is configured to indicate the terminal device to determine a channel estimation model; and sending a PDSCH to the terminal device, in which the PDSCH is configured to carry data and a DMRS signal; the data and the DMRS signal are configured for the terminal device to determine model input data according to a first format requirement of input data of the channel estimation model, and determine a candidate channel estimation result according to the model input data and the channel estimation model.
In a third aspect, embodiments of the present disclosure provide a communication device having part or all of functions for implementing the terminal device in the method of the first aspect. For example, the functions of the communication device can have the functions of part of all of embodiments in the present disclosure, or can have a function for separately implementing any one embodiment of the present disclosure. The functions can be realized in hardware or by executing a corresponding software in hardware. The hardware or software includes one or more units or modules corresponding to the functions described above.
In an implementation, the communication device may include in its structure a transceiver module and a processing module, and the processing module is configured to support the communication device to perform the corresponding functions in the method described above. The transceiver module is configured to support communication between the communication device and other devices. The communication device may further include a storage module, the storage module is configured to couple with the transceiver module and the processing module, which stores a computer program and data necessary for the communication device.
In an implementation, the communication device includes: a processing module configured to determine a channel estimation model and a first format requirement of input data of the channel estimation model; and a transceiver module configured to receive a PDSCH sent by a network side device, the PDSCH being configured to carry data and a DMRS signal. The processing module is further configured to determine model input data according to the first format requirement, the data and the DMRS signal; and the processing module is further configured to determine a candidate channel estimation result according to the model input data and the channel estimation model.

In a fourth aspect, embodiments of the present disclosure provide another communication device having part or all of functions for implementing the network side device in the method of the second aspect. For example, the functions of the communication device can have the functions of part of all of embodiments in the present disclosure, or can have a function for separately implementing any one embodiment of the present disclosure. The functions can be realized in hardware or by executing a corresponding software in hardware. The hardware or software includes one or more units or modules corresponding to the functions described above.

In an implementation, the communication device may include in its structure a transceiver module and a processing module, and the processing module is configured to support the communication device to perform the corresponding functions in the method described above. The transceiver module is configured to support communication between the communication device and other devices. The communication device may further include a storage module, the storage module is configured to couple with the transceiver module and the processing module, which stores a computer program and data necessary for the communication device.

In an implementation, the communication device includes: a processing module configured to determine a channel estimation model; and a transceiver module configured to send configuration information to a terminal device, in which the configuration information is configured to indicate the terminal device to determine a channel estimation model. The transceiver module is further configured to send a PDSCH to the terminal device, the PDSCH is configured to carry data and a DMRS signal, and the data and the DMRS signal are configured for the terminal device to determine model input data according to a first format requirement of input data of the channel estimation model, and determine a candidate channel estimation result according to the model input data and the channel estimation model.

In a fifth aspect, embodiments of the present disclosure provide a communication device including a processor, in which the processor when invoking a computer program in a memory performs the method of the first aspect.

In a sixth aspect, embodiments of the present disclosure provide a communication device including a processor, in which the processor when invoking a computer program in a memory performs the method of the second aspect.

In a seventh aspect, embodiments of the present disclosure provide a communication device including a processor and a memory storing a computer program. The processor executes the computer program stored in the memory to cause the communication device to perform the method of the first aspect.

In an eighth aspect, embodiments of the present disclosure provide a communication device including a processor and a memory storing a computer program. The processor executes the computer program stored in the memory to cause the communication device to perform the method of the second aspect.

In a ninth aspect, embodiments of the present disclosure provide a communication device including a processor and an interface circuit. The interface circuit is configured to receive code instructions and transmit the code instructions to the processor, and the processor is configured to run the code instructions to cause the device to perform the method of the first aspect.

In a tenth aspect, embodiments of the present disclosure provide a communication device including a processor and an interface circuit. The interface circuit is configured to receive code instructions and transmit the code instructions to the processor, and the processor is configured to run the code instructions to cause the device to perform the method of the second aspect.

In an eleventh aspect, embodiments of the present disclosure provide a communication system. The system includes the communication device described in the third aspect and the communication device described in the fourth aspect, or, alternatively, the system includes the communication device described in the fifth aspect and the communication device described in the sixth aspect, or, the system includes the communication device described in the seventh aspect and the communication device described in the eighth aspect, or, the system includes the communication device described in the ninth aspect and the communication device described in the tenth aspect.

In a twelfth aspect, embodiments of the present disclosure provide a computer-readable storage medium configured to store instructions for use by the terminal device. When the instructions are executed, the terminal device is caused to perform the method of the first aspect.

In a thirteenth aspect, embodiments of the present disclosure provide a computer-readable storage medium configured to store instructions for use by the network side device. When the instructions are executed, the network side device is caused to perform the method of the second aspect.

In a fourteenth aspect, the present disclosure further provides a computer program product including a computer program that, when run on a computer, causes the computer to perform the method of the first aspect.

In a fifteenth aspect, the present disclosure further provides a computer program product including a computer program that, when run on a computer, causes the computer to perform the method of the second aspect.

In a sixteenth aspect, the present disclosure provides a chip system including at least one processor and an interface configured to support a terminal device to implement the functions involved in the first aspect, for example, determining or processing at least one of the data and information involved in the method described above. In a possible design, the chip system further includes a memory configured to store a computer program and data necessary for the terminal device. The chip system may be composed of a chip or may include a chip and other discrete devices.

In a seventeenth aspect, the present disclosure provides a chip system including at least one processor and an interface configured to support the network side device to implement the functions involved in the second aspect, for example, determining or processing at least one of the data and information involved in the method described above. In a possible design, the chip system further includes a memory configured to store a computer program and data necessary for the network side device. The chip system may be composed of a chip or may include a chip and other discrete devices.

In an eighteenth aspect, the present disclosure provides a computer program that, when run on a computer, causes the computer to perform the method of the first aspect.

In a nineteenth aspect, the present disclosure provides a computer program that, when run on a computer, causes the computer to perform the method of the second aspect.

BRIEF DESCRIPTION OF THE DRAWINGS

In order to more clearly illustrate the technical solutions in the embodiments or background art of the present disclosure, the accompanying drawings to be used in the embodiments or background art of the present disclosure will be described below.

FIG. 1 is an architectural diagram of a communication system provided by an embodiment of the present disclosure;
FIG. 2 is a flow chart of a method for a channel estimation based on artificial intelligence (AI) provided by an embodiment of the present disclosure;
FIG. 3 is a flow chart of another method for a channel estimation based on artificial intelligence (AI) provided by an embodiment of the present disclosure;
FIG. 4 is a flow chart of yet another method for a channel estimation based on artificial intelligence (AI) provided by an embodiment of the present disclosure;
FIG. 5 is a flow chart of yet another method for a channel estimation based on artificial intelligence (AI) provided by an embodiment of the present disclosure;
FIG. 6 is a flow chart of yet another method for a channel estimation based on artificial intelligence (AI) provided by an embodiment of the present disclosure;
FIG. 7 is a flow chart of yet another method for a channel estimation based on artificial intelligence (AI) provided by an embodiment of the present disclosure;
FIG. 8 is a flow chart of yet another method for a channel estimation based on artificial intelligence (AI) provided by an embodiment of the present disclosure;
FIG. 9 is a flow chart of yet another method for a channel estimation based on artificial intelligence (AI) provided by an embodiment of the present disclosure;
FIG. 10 is a flow chart of yet another method for a channel estimation based on artificial intelligence (AI) provided by an embodiment of the present disclosure;
FIG. 11 is a flow chart of yet another method for a channel estimation based on artificial intelligence (AI) provided by an embodiment of the present disclosure;
FIG. 12 is a structural diagram of a communication device provided by an embodiment of the present disclosure;
FIG. 13 is a structural diagram of another communication device provided by an embodiment of the present disclosure; and
FIG. 14 is a schematic diagram of a chip provided by an embodiment of the present disclosure.

DETAILED DESCRIPTION

In order to better understand a method and apparatus for a channel estimation based on artificial intelligence (AI) disclosed in embodiments of the present disclosure, a communication system to which embodiments of the present disclosure apply is first described below.

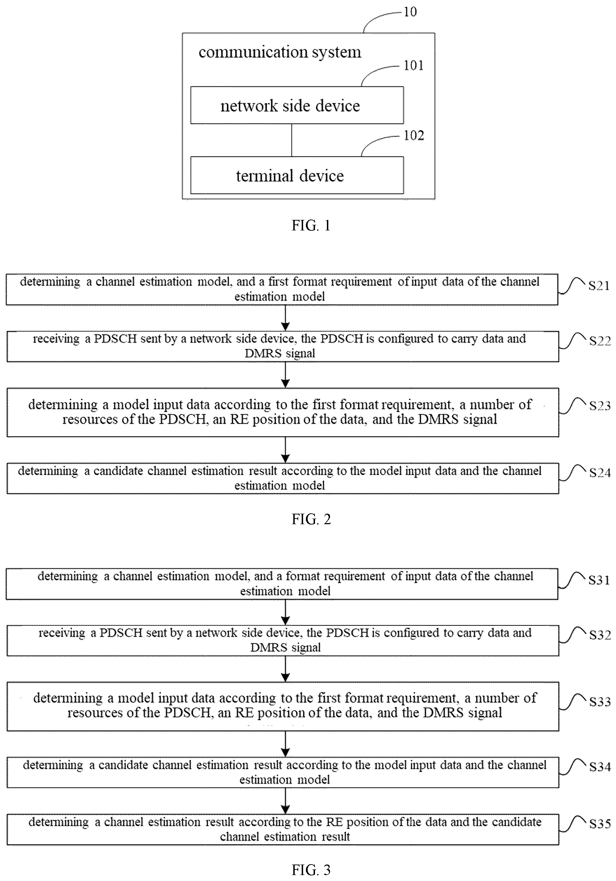

Referring to FIG. 1, FIG. 1 is an architectural diagram of a communication system provided by an embodiment of the present disclosure. The communication system may include, but is not limited to, a network side device and a terminal device, the number and form of devices shown in FIG. 1 are for example only and do not constitute a limitation of the embodiments of the present disclosure, and a practical application may include two or more network side devices, and two or more terminal devices. The communication system 10 shown in FIG. 1 is an example of a communication system 10 including a network side device 101 and a terminal device 102.

It should be noted that the technical solutions of the embodiments of the present disclosure can be applied to various communication systems. Examples include long term evolution (LTE) systems, fifth generation (5G) mobile communication systems, 5G new radio (NR) systems, or other future new mobile communication systems. It should be noted that the side link in embodiments of the present disclosure may also be referred to as a sidelink or a direct link.

The network side device 101 in embodiments of the present disclosure is an entity on a network side for transmitting or receiving signals. For example, the network side device 101 may be an evolved NodeB (eNB), a transmission reception point (TRP), a next generation NodeB (gNB) in an NR system, a base station in other future mobile communication systems, or an access node in a wireless fidelity (WiFi) system, etc. The embodiments of the present disclosure do not limit the specific technology and specific device form used in the base station. The base station provided by embodiments of the present disclosure may be composed of a centralized unit (CU) and a distributed unit (DU), in which the CU may also be referred to as a control unit (control unit), and the use of the CU-DU structure allows the base station, for example, the protocol layer of the base station to be split apart, with some of the functions of the protocol layer placed in the CU for centralized control, the remaining functions of part or all of the protocol layer distributed in the DU, and the DU centrally controlled by the CU.

The terminal device 102 in embodiments of the present disclosure is an entity on a user side for receiving or transmitting signals, such as a cell phone. The terminal equipment can also be called a terminal, user equipment (UE), a mobile station (MS), a mobile terminal (MT) and so on. The terminal device can be a vehicle with a communication function, a smart vehicle, a mobile phone, a wearable device, a tablet computer (Pad), a computer with wireless transceiver function, a virtual reality (VR) terminal device, an augmented reality (AR) terminal device, a wireless terminal device in industrial control), a wireless terminal device in self-driving, a wireless terminal device in remote medical surgery, a wireless terminal device in smart grid, a wireless terminal device in transportation safety, a wireless terminal device in smart city, a wireless terminal device in smart home, and so on. The embodiments of the present disclosure do not limit the specific technology and the specific device form used for the terminal device.

It may be understood that the communication system described in the embodiments of the present disclosure is intended to more clearly illustrate the technical solutions of the embodiments of the present disclosure and does not constitute a limitation of the technical solutions provided by the embodiments of the present disclosure, and it may be known to a person of ordinary skill in the art that, with the evolution of the system architecture and the emergence of new business scenarios, the technical solutions provided by the embodiments of the present disclosure are equally applicable to similar technical problems.

In related art, a configuration of DMRS in NR systems or other systems can differ in several aspects:

1) The number of DMRS is different: e.g., it is possible to configure only front-loaded DMRS or both front-loaded DMRS and additional DMRS. Furthermore, the number of configurations for additional DMRS can be changed.

2) The number of symbols occupied by DMRS is different: e.g., it is possible to configure it as either a dual-symbol DMRS or a single-symbol DMRS.

3) The frequency domain density of DMRS is different: e.g., in DMRS configuration type 1, there are 6 REs (Resource Element) in one RB (Resource Block) used to carry DMRS; in configuration type 2, there are 4 REs in one RE used to carry DMRS.

4) The frequency domain bandwidth of DMRS is different: transmissions in different slots can be dynamically indicated by the network side device (base station) on the number of frequency domain resources for PDSCH (physical downlink shared channel); e.g., the base station can dynamically allocate different numbers of consecutive RBs, such as 2, 4, 6, 7, and so on.

5) The number of assigned time domain symbols of the PDSCH is different, which leads to changes in the number of DMRSs and the time domain position.

6) Precoding granularity is different: for example, under the continuous resource allocation mode, {2, 4, wideband} can be used for precoding, e.g., if the precoding granularity is configured or supported to be 2 or 4, channel estimation can only be performed together within 2 or 4 PRBs (physical resource block), and if the precoding granularity is wideband, then the channel estimation can be performed together within all RBs.

7) The symbol position of DMRS is different: the number of symbols in the time domain of PDSCH, the mapping type of PDSCH, and the number of DMRS, etc., together determine the symbol position of DMRS.

8) The frequency domain RE positions of DMRS are not the same: The frequency domain RE positions of DMRS are related to different CDM (code division multiplexing) groups, as shown below:

$$\tilde{a}_{k,l}^{(\overline{P}_j,\ u)} = w_f(k')\ w_t(l')\ r\ (2n+k')$$

$$k = \begin{cases} 4n + 2k' + \varDelta \\ 6n + k' + \varDelta \end{cases}$$

, where, $4n + 2k' + \varDelta$ is configuration type 1, and $6n + k' + \varDelta$ is configuration type 2.

$$k' = 0,1$$

$$l = \bar{l} + l'$$

$$n = 0,1...$$

$$j = 0,1,...,v-1$$

| $p$ | CDM group $\lambda$ | $\varDelta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Table 1

| $p$ | CDM group $\lambda$ | $\varDelta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

Table 2

As shown in Table 1 and Table 2 above, where Table 1 shows the parameters for DMRS configuration type 1 and Table 2 shows the parameters for DMRS configuration type 2. For configuration type 1, when the PDSCH DMRS port indicated by the base station belongs to CDM group 0, the DMRS is located at positions RE#0, 2, 4, 6, 8, 10, etc., of each RB; when it belongs to CDM group 1, the DMRS is located at positions RE#1, 3, 5, 7, 9, 11 of each RB.

9) The time domain mapping manner of PDSCH is different: the mapping manner of PDSCH affects the symbol position of DMRS, for example, in PDSCH mapping type B, front-loaded DMRS is on the first symbol of the allocated PDSCH resource; in PDSCH mapping type A, front-loaded DMRS is fixed on symbol 2 or symbol 3.

From the above, it can be seen that the DMRS has a variety of different configurations, and different DMRS configurations result in different input dimensions and/or output dimensions, and different input dimensions and/or output dimensions may further result in the need for different AI-based channel estimation models under different configurations, resulting in the need for the terminal device to maintain a plurality of AI-based channel estimation models, which can increase complexity and overhead of maintenance.

Based on this, embodiments of the present disclosure provide a method and apparatus for a channel estimation based on AI, to determine a channel estimation model with a unified input format; for different input dimensions, they are adjusted to a unified input format, and after channel estimation by the channel estimation model, the channel estimation result can be obtained in a unified output format, thus a unified channel estimation model can be used for the channel estimation without the need to maintain a plurality of channel estimation models, which can reduce the complexity and overhead.

A method and apparatus for a channel estimation based on artificial intelligence (AI) provided in the present disclosure are described in detail below in conjunction with the accompanying drawings.

Referring to FIG. 2, FIG. 2 is a flow chart of a method for a channel estimation based on artificial intelligence (AI) provided by an embodiment of the present disclosure.

As shown in FIG. 2, the method is performed by a terminal device, and the method may include, but is not limited to, the following steps:

In S21: a channel estimation model and a first format requirement of input data of the channel estimation model are determined.

The channel estimation model may be obtained by training an initial channel estimation model, the initial channel estimation model is an AI-based model, the initial channel estimation model may be obtained using methods in the related art, or, may be obtained by obtaining an initial model using methods in the related art and structurally improving the initial model, and so on, which is not specifically limited by embodiments of the present disclosure.

In embodiments of the present disclosure, the terminal device determines the channel estimation model, which may be determined by training the initial channel estimation model by the terminal device, or may also be determined according to a protocol agreement, or may also be determined according to an indication of the network side device.

The terminal device performs determining the channel estimation model according to the indication of the network side device, which may be that the network side device trains the initial channel estimation model, obtains the channel estimation model, and then indicate the channel estimation model to the terminal device, or, the network side device may indicate a relevant configuration of the channel estimation model to the terminal device, and the terminal device may determine the channel estimation model after receiving the relevant configuration of the channel estimation model sent by the network side device.

In embodiments of the present disclosure, the terminal device determines a first format requirement of input data of the channel estimation model, and in a case where the terminal device determining the channel estimation model may be determined by training the initial channel estimation model by the terminal device, a format of training input data used by the terminal device when training the initial channel estimation model is the first format requirement of the input data of the channel estimation model, and the terminal device may determine the first format requirement of the input data.

In embodiments of the present disclosure, the terminal device determines the first format requirement of the input data of the channel estimation model, and in a case where the terminal device determining the channel estimation model may be determined according to the protocol agreement, the first format requirement of the input data of the channel estimation model may also be determined according to the protocol agreement.

In embodiments of the present disclosure, the terminal device determines the first format requirement of the input data of the channel estimation model, and in a case where the terminal device determining the channel estimation model may be determined according to the indication of the network side device, the first format requirement of the input data of the channel estimation model may also be determined according to the indication of the network side device.

In some embodiments, the first format requirement includes at least one of:

N RBs being in a frequency domain, where N is a positive integer;
M OFDM symbols being in a time domain, where M is a positive integer; and
L layers being in a spatial domain, where L is a positive integer.

In embodiments of the present disclosure, the first format requirement is that N RBs are in the frequency domain, e.g., 1 resource block (RB).

In embodiments of the present disclosure, the first format requirement is that M OFDM symbols are in the time domain, e.g., 14 orthogonal frequency division multiplexing (OFDM) symbols.

In embodiments of the present disclosure, the first format requirement is that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In S22: a PDSCH sent by a network side device is received, and the PDSCH is configured to carry data and a DMRS signal.

In embodiments of the present disclosure, the terminal device receives the PDSCH sent by the network side device, and the PDSCH is configured to carry the data and the DMRS signal to perform the channel estimation according to the data and the DMRS signal.

In S23: model input data is determined according to the first format requirement, a number of resources of the PDSCH, an RE position of the data, and the DMRS signal.

In embodiments of the present disclosure, in a case of determining the first format requirement of the input data of the channel estimation model, it is necessary to obtain the model input data satisfying the first format requirement.

The model input data may be determined according to the first format requirement, the number of resources of the PDSCH, the RE position of the data, and the DMRS signal, i.e., the DMRS signal is processed into the model input data satisfying the first format requirement, or, the model input data may be determined according to the DMRS signal together with other information, i.e., relevant information is obtained according to the DMRS signal and the other information, and the relevant information is processed into the model input data satisfying the first format requirement, etc., which is not specifically limited by embodiments of the present disclosure.

In embodiments of the present disclosure, the number of resources of the PDSCH may be how many OFDM symbols the PDSCH includes in the time domain, how many RBs it includes in the frequency domain, and how many layers it includes in the spatial domain.

An example of the RE position of the data: in a case where the number of resources of the PDSCH in the time domain is 10 OFDM symbols, the RE position of the data may be at any number of OFDM symbols from the 10 OFDM symbols, e.g., at the first 3 OFDM symbols and at the 5th OFDM symbol, and so on.

In S24: a candidate channel estimation result is determined according to the model input data and the channel estimation model.

In embodiments of the present disclosure, in a case where the terminal device determines the channel estimation model, and the model input data satisfying the first format requirement, the terminal device may input the model input data to the channel estimation model for inference to obtain the candidate channel estimation result.

It should be understood that a structural parameter of the channel estimation model is certain, and in a case that the format of the model input data satisfies the first format requirement, the format of the model input data input to the channel estimation model is consistent, and the format of the candidate channel estimation result obtained after processing by the same model is also consistent.

Based on this, a unified channel estimation model can be used for the channel estimation in embodiments of the present disclosure without the need to maintain the plurality of channel estimation models, which can reduce complexity and overhead.

It should be noted that in the embodiments of the present disclosure, the model input data is determined according to the first format requirement, the number of resources of the PDSCH, the RE position of the data, and the DMRS signal, and the model input data may be a set of data satisfying the first format requirement, or may also be a plurality of sets of data satisfying the first format requirement separately.

Based on this, in embodiments of the present disclosure, a plurality of sets of model input data separately satisfying the first format requirement may be sequentially input to the channel estimation model for parallel inference, or, a plurality of sets of model input data separately satisfying the first format requirement may be respectively input to the same plurality of channel estimation models for parallel inference, which can further shorten the latency.

By implementing embodiments of the present disclosure, the terminal device determines the channel estimation model and the first format requirement of the input data of the channel estimation model; receives the PDSCH sent by the network side device, the PDSCH being configured to carry the data and the DMRS signal; determines the model input data according to the first format requirement, the number of resources of the PDSCH, the RE position of the data, and the DMRS signal; and determines a candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

In some embodiments, the terminal device determines a channel estimation result according to the RE position of the data and the candidate channel estimation result.

In embodiments of the present disclosure, in a case where the terminal device determines the candidate channel estimation result according to the model input data and the channel estimation model, the terminal device may further determine the channel estimation result according to the RE position of the data and the candidate channel estimation result.

It could be understood that the first format requirement is that one RB is in the frequency domain, and in a case where the number of the resources of the PDSCH in the frequency domain is a plurality of RBs, the plurality of RBs are split into a plurality of single RBs, a value of the RE position of the data of each single RB is taken to be 0, and the model input data of the plurality of single RBs is obtained; and the candidate channel estimation result is determined according to the model input data and the channel estimation model.

By way of example, the model input data includes RB1 data and RB2 data, a candidate channel estimation result is determined according to the model input data and the channel estimation model, and the candidate channel estimation result is determined to include a candidate channel estimation result #1 corresponding to the RB1 data, and a candidate channel estimation result #2 corresponding to the RB2 data.

In this case, the channel estimation result is determined according to the RE position of the data and the candidate channel estimation result, and a candidate channel result 1 of the RE position of the data in the RB1 data can be obtained from the candidate channel estimation result #1 corresponding to the RB1 data, and a candidate channel result 2 of the RE position of the data in the RB1 data can be obtained from the candidate channel estimation result #2 corresponding to the RB2 data, and the candidate channel result 1 and candidate channel result 2 are determined to be channel estimation results.

It could be understood that the first format requirement is that 14 OFDM symbols are in the time domain, and in a case where the number of the resources of the PDSCH in the time domain is less than 14 OFDM symbols, the number of the resources of the PDSCH is made up to 14 OFDM symbols, a value of the RE position of the data is taken to be 0, a value of a position corresponding to a made-up OFDM symbol is taken to be 0, and the model input data is obtained; and the candidate channel estimation result is determined according to the model input data and the channel estimation model.

By way of example, the PDSCH has a number of resources in the time domain of 10 OFDM symbols, and the make-up of the 14 OFDM symbols can be done by making up 4 OFDM symbols after the 10 OFDM symbols of the number of resources of the PDSCH, or before the 10 OFDM symbols of the number of resources of the PDSCH, or at specific positions between the 10 OFDM symbols of the number of resources of the PDSCH.

Based on this, in a case where the number of resources of the PDSCH in the time domain is less than 14 OFDM symbols, the number of resources of the PDSCH is made up to 14 OFDM symbols to obtain the model input data, and the candidate channel estimation result is determined according to the model input data and the channel estimation model.

It could be understood that the candidate channel estimation result obtained are also 14 OFDM symbols, and in this case, determining the channel estimation result according to the RE position of the data and the candidate channel estimation result may be that a result of the RE position of the data can be extracted from the candidate channel estimation result of the 14 OFDM symbols, and the channel estimation result can be determined.

It could be understood that the first format requirement is that one layer is in the spatial domain, and in a case where the number of the resources of the PDSCH in the spatial domain is a plurality of layers, the plurality of layers are split into a plurality of single layers, a value of the RE position of the data of each single layer is taken to be 0, and the model input data of the plurality of single layers is obtained; and the candidate channel estimation result is determined according to the model input data and the channel estimation model.

By way of example, the model input data includes layer 1 data and layer 2 data, a candidate channel estimation result is determined according to the model input data and the channel estimation model, and the candidate channel estimation result is determined to include a candidate channel estimation result #1 corresponding to the layer 1 data, and a candidate channel estimation result #2 corresponding to the layer 2 data.

In this case, the channel estimation result is determined according to the RE position of the data and the candidate channel estimation result, and a candidate channel result 1 of the RE position of the data in the RB1 data can be obtained from the candidate channel estimation result #1 corresponding to the layer 1 data, and a candidate channel result 2 of the RE position of the data in the RB1 data can be obtained from the candidate channel estimation result #2 corresponding to the layer 2 data, and the candidate channel result 1 and candidate channel result 2 are determined to be channel estimation results.

In some embodiments, the terminal device determining the channel estimation model includes: receiving configuration information sent by the network side device; and determining the channel estimation model according to the configuration information.

In embodiments of the present disclosure, the terminal device receives configuration information sent by the network side device, in which the configuration information is configured to indicate the channel estimation model, or the configuration information is configured to indicate a relevant configuration or structural parameter, etc., of the channel estimation model. Thus, the terminal device may determine the channel estimation model according to the configuration information of the network side device.

In a case where the configuration information is configured to indicate the channel estimation model, the network side device may train an initial channel estimation model to obtain the channel estimation model, and then send the channel estimation model to the terminal device through the configuration information.

In a case where the configuration information is configured to indicate the structural parameter of the channel estimation model, the network side device may indicate a relevant configuration or structural parameter, etc., of the channel estimation model to the terminal device, and the terminal device may determine the channel estimation model according to the configuration information after receiving the configuration information sent by the network side device. The network side device may train the channel estimation model to obtain the channel estimation model, and then indicates, for example, relevant configuration or structural parameter of the channel estimation model to the terminal device.

In some embodiments, the terminal device determining the channel estimation model includes: obtaining a sample data set according to the first format requirement; training the initial channel estimation model according to the sample data set, and determining the channel estimation model.

In embodiments of the present disclosure, the terminal device determines the channel estimation model, which may be determined by training the initial channel estimation model, in which the terminal device first obtains a sample data set satisfying the first format requirement according to the first format requirement of the input data, and trains the initial channel estimation model according to the sample data set to determine the channel estimation model.

The initial channel estimation model is trained according to the sample data set to determine the channel estimation model, which may be trained based on self-supervised learning, and training data in the sample data set satisfying the first format requirement is input to the initial channel estimation model, the initial channel estimation model is trained, and the channel estimation model is then determined.

It should be noted that, in embodiments of the present disclosure, the initial channel estimation model may adopt an AI model in the related art, in which the terminal device, after obtaining the training data input to the AI model from the sample data set satisfying the first format requirement, performs training based on the self-supervised learning to determine the channel estimation model.

Of course, in a case where the AI model in the related art is unable to satisfy training according to the training data in the sample data set of the first format requirement, embodiments of the present disclosure may also improve the AI model in the related art according to the first format requirement.

In some embodiments, the terminal device determines a second format requirement of output data of the channel estimation model; an initial channel estimation model is determined according to the first format requirement and/or the second format requirement.

In embodiments of the present disclosure, the terminal device determines the first format requirement of the input data of the channel estimation model and the second format requirement of the output data of the channel estimation model, determines the initial channel estimation model according to the first format requirement and/or the second format requirement, and may improve the structure, parameter, and other information of the AI model in the related art according to the first format requirement and/or the second format requirement to determine the initial channel estimation model.

Based on this, on the basis of determining the initial channel estimation model, and the sample data set, the determined initial channel estimation model can be trained according to the sample data set to obtain the channel estimation model.

In some embodiments, the second format requirement includes at least one of:

N resource blocks (RBs) being in a frequency domain, where N is a positive integer;
M OFDM symbols being in a time domain, where M is a positive integer; and
L layers being in a spatial domain, where L is a positive integer.

In embodiments of the present disclosure, the second format requirement may be that N resource blocks (RBs) are in the frequency domain, e.g., 1 RB.

In embodiments of the present disclosure, the second format requirement may be that M OFDM symbols are in the time domain, e.g., 14 orthogonal frequency division multiplexing (OFDM) symbols.

In embodiments of the present disclosure, the second format requirement may be that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the sample data set includes sample input data, in which obtaining the sample data set according to the first format requirements includes: obtaining a sample PDSCH, the sample PDSCH being configured to carry the sample data and the sample DMRS signal; performing channel estimation on the DMRS time-frequency position based on the sample DMRS signal and the sample DMRS sending signal to obtain a sample estimation channel value of the DMRS position; obtaining sample input data according to the first format requirement, the number of resources of the sample PDSCH, the RE position of the sample data, and the sample estimation channel value of the DMRS position.

In a possible implementation, the sample data set includes sample input data, and the terminal device obtains the sample data set according to the first format requirement, and may obtain the sample PDSCH in advance, the sample PDSCH being configured to carry the sample data and the sample DMRS signal; and obtains the sample input data according to the first format requirement, the number of resources of the sample PDSCH, the RE position of the sample data, and the sample DMRS signal.

In embodiments of the present disclosure, the terminal device obtains the sample PDSCH, which may be that the PDSCH sent by the network side device is received and pre-stored, and in a case of needing to obtain a sample data set, the pre-stored sample PDSCH may be obtained directly, or may also be obtained in other ways, which are not specifically limited by embodiments of the present disclosure.

It could be understood that in embodiments of the present disclosure, the sample data set includes the sample input data, and the sample input data may be determined directly according to the first format requirement, the number of resources of the sample PDSCH, the RE position of the sample data, and the sample DMRS signal.

The terminal device receives the sample PDSCH sent by the network side device, and the sample DMRS signal is carried in the sample PDSCH.

Obtaining sample input data according to the first format requirement, the number of resources of the sample PDSCH, the RE position of the sample data, and the sample DMRS signal includes:

in response to determining that the number of the resources of the sample PDSCH in the time domain is less than 14 OFDM symbols, making up the number of the resources of the sample PDSCH to 14 OFDM symbols, taking a value of the RE position of the sample data to be 0, taking a value of a position corresponding to a made-up OFDM symbol to be 0, and obtaining the sample input data; and/or

in response to determining that the number of the resources of the sample PDSCH in the frequency domain is a plurality of RBs, splitting the plurality of RBs into a plurality of single RBs, taking a value of the RE position of the sample data of each single RB to be 0, and obtaining the sample input data of the plurality of single RBs; and/or

in response to determining that the number of the resources of the sample PDSCH in the spatial domain is a plurality of layers, splitting the plurality of layers into a plurality of single layers, taking a value of the RE position of the sample data of each single layer to be 0, and obtaining the sample input data of the plurality of single layers.

In embodiments of the present disclosure, the sample input data is obtained according to the first format requirement, the number of resources of the sample PDSCH, the RE position of the sample data, and the sample DMRS signal, and in a case where in the time domain the number of resources of the sample PDSCH is less than 14 OFDM symbols, the number of resources of the sample PDSCH is made up to 14 OFDM symbols, a value of the RE position of the sample data is taken to be 0, a value of a position corresponding to the made-up OFDM symbol is taken to be 0, a value of a position corresponding to the OFDM symbol of the sample DMRS signal is taken to be the sample DMRS signal, and the sample input data is obtained.

In embodiments of the present disclosure, the sample input data is obtained according to the first format requirement, the number of resources of the sample PDSCH, the RE position of the sample data, and the sample DMRS signal, and in the case where the number of resources of the sample PDSCH in the frequency domain is a plurality of RBs, the plurality of RBs are split into a plurality of single RBs, a value of the RE position of the sample data of each single RB is taken to be 0, and the sample input data of the plurality of single RBs is obtained.

In embodiments of the present disclosure, the sample input data is obtained according to the first format requirement, the number of resources of the sample PDSCH, the RE position of the sample data, and the sample DMRS signal, and in a case where the number of resources of the sample PDSCH in the spatial domain is a plurality of layers, the plurality of layers are split into a plurality of single layers, a value of the RE position of the sample data of each single layer is taken to be 0, and the sample input data of the plurality of single layers is obtained.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

It could be understood that the sample data set may include a plurality of sets of sample input data, and the plurality of sets of sample input data may be obtained according to the first format requirement, the plurality of sets of sample data sent by the network side device, and the sample DMRS signal.

In another possible implementation, the sample data set includes sample input data, and the terminal device obtains the sample data set according to the first format requirement, and may obtain the sample PDSCH in advance, the sample PDSCH being configured to carry the sample data and the sample DMRS signal; performs channel estimation on the DMRS time-frequency position according to the sample DMRS signal and the sample DMRS sending signal, obtains the sample estimation channel value of the DMRS position, and obtains the sample input data according to the first format requirement, the number of resources of the sample PDSCH, the RE position of the sample data, and the sample estimation channel value of the DMRS position.

In embodiments of the present disclosure, the terminal device obtains the sample PDSCH, which may be that the PDSCH sent by the network side device is received and pre-stored, and in a case of needing to obtain a sample data set, the pre-stored sample PDSCH may be obtained directly, or may also be obtained in other ways, which are not specifically limited by embodiments of the present disclosure.

The terminal device receives the sample PDSCH sent by the network side device, and the sample DMRS signal is carried in the sample PDSCH.

It could be understood that the network side device sends an original sequence of DMRS to the terminal device before sending the sample PDSCH, and the terminal device can determine the sample DMRS sending signal sent by the network side device corresponding to the received sample DMRS signal.

Based on this, in a case where the sample DMRS signal and the sample DMRS sending signal are obtained, the channel estimation on the DMRS time-frequency position can be performed according to the sample DMRS signal and the sample DMRS sending signal, and the sample estimation channel value of the DMRS position can be obtained.

In embodiments of the present disclosure, the sample data set includes the sample input data, and the terminal device obtains the sample data set according to the first format requirement, and may obtain the sample input data according to the first format requirement, the number of resources of the sample PDSCH, the RE position of the sample data, and the sample estimation channel value of the DMRS position. It includes:

in response to determining that the number of the resources of the sample PDSCH in the time domain is less than 14 OFDM symbols, making up the number of the resources of the sample PDSCH to 14 OFDM symbols, taking a value of the RE position of the sample data to be 0, taking a value of a position corresponding to a made-up OFDM symbol to be 0, taking a value of a position corresponding to an OFDM symbol of the sample DMRS signal to be the sample estimation channel value of the DMRS position, and obtaining the sample input data; and/or

in response to determining that the number of the resources of the sample PDSCH in the frequency domain is a plurality of RBs, splitting the plurality of RBs into a plurality of single RBs, taking a value of the RE position of the sample data of each single RB to be 0, taking a value of the RE position of the sample DMRS signal of each single RB to be the sample estimation channel value of the DMRS position, and obtaining the sample input data of the plurality of single RBs; and/or

in response to determining that the number of the resources of the sample PDSCH in the spatial domain is a plurality of layers, splitting the plurality of layers into a plurality of single layers, taking a value of the RE position of the sample data of each single layer to be 0, taking a value of the RE position of the sample DMRS signal to be the sample estimation channel value of the DMRS position, and obtaining the sample input data of the plurality of single layers.

In embodiments of the present disclosure, the sample input data is obtained according to the first format requirement, the number of resources of the sample PDSCH, the RE position of the sample data, and the estimation channel value of the sample DMRS position, and in a case where in the time domain the number of resources of the sample PDSCH is less than 14 OFDM symbols, the number of resources of the sample PDSCH is made up to 14 OFDM symbols, a value of the RE position of the sample data is taken to be 0, a value of a position corresponding to the made-up OFDM symbol is taken to be 0, a value of a position corresponding to the OFDM symbol of the sample DMRS signal is taken to be the sample estimation channel value of the DMRS position, and the sample input data is obtained.

In embodiments of the present disclosure, the sample input data is obtained according to the first format requirement, the number of resources of the sample PDSCH, the RE position of the sample data, and the estimation channel value of the sample DMRS position, and in the case where the number of resources of the sample PDSCH in the frequency domain is a plurality of RBs, the plurality of RBs are split into a plurality of single RBs, a value of the RE position of the sample data of each single RB is taken to be 0, a value of the RE position of the sample DMRS signal of each single RB is taken to be the sample estimation channel value of the DMRS position, and the sample input data of the plurality of single RBs is obtained.

In embodiments of the present disclosure, the sample input data is obtained according to the first format requirement, the number of resources of the sample PDSCH, the RE position of the sample data, and the estimation channel value of the sample DMRS position, and in a case where the number of resources of the sample PDSCH in the spatial domain is a plurality of layers, the plurality of layers are split into a plurality of single layers, a value of the RE position of the sample data of each single layer is taken to be 0, a value of the RE position of the sample DMRS signal of each single layer is taken to be the sample estimation channel value of the DMRS position, and the sample input data of the plurality of single layers is obtained.

It could be understood that the sample data set may include a plurality of sets of sample input data, and the plurality of sets of sample input data may be obtained according to the first format requirement, the plurality of sets of sample data sent by the network side device, and the sample estimation channel value of the DMRS position.

In some other embodiments, the terminal device determining the channel estimation model includes: determining a second format requirement of output data of the channel estimation model; determining the initial channel estimation model according to the first format requirement and/or the second format requirement; obtaining the sample data set according to the first format requirement and the second format requirement; and training the initial channel estimation model according to the sample data set, and determining the channel estimation model.

In embodiments of the present disclosure, the terminal device determines the channel estimation model, which may be determined by training the initial channel estimation model by the terminal device.

It could be understood that the initial channel estimation model may be an AI model in the related art, and the terminal device may train the initial channel estimation model that is the AI model in the related art to obtain the channel estimation model.

However, in the channel estimation model, the input data has a first format requirement and/or the output data has a second format requirement. In this case, the AI model in the related art may not be used as an initial channel estimation model, and it may also be understood that the channel estimation model cannot be obtained by directly training the initial channel estimation model that is the AI model in the related art.

Based on this, in embodiments of the present disclosure, the initial channel estimation model may be determined according to the first format requirement and/or the second format requirement, in which the structure, parameter, and other related configurations of the AI model in the related art may be improved according to the first format requirement and/or the second format requirement, thereby obtaining the initial channel estimation model.

Afterwards, the terminal device determines the initial channel estimation model, and also needs to obtain a sample data set satisfying the first format requirement and the second format requirement, and after obtaining the sample data set, the initial channel estimation model may be trained according to the sample data set to obtain the channel estimation model.

In some embodiments, the sample data set includes sample input data and sample output data, and obtaining the sample data set according to the first format requirement and the second format requirement includes: obtaining the sample input data according to the first format requirement; and obtaining the sample output data according to the second format requirement.

In some embodiments, the sample data set includes sample input data and sample output data, the sample input data is obtained according to the first format requirement and satisfies the first format requirement, and the sample output data is obtained according to the second format requirement and satisfies the second format requirement.

In embodiments of the present disclosure, the initial channel estimation model is trained according to the sample dataset, the channel estimation model is determined, which may be that the sample input data is input to the initial channel estimation model, the training output data is obtained, and a loss is calculated according to the training output data and the sample output data to update the parameter of the initial channel estimation model, and thus the channel estimation model is obtained.

The sample data set may include a plurality of sets of sample input data and sample output data, and the plurality of sets of sample input data and sample output data are used to train the initial channel estimation model in the manner described above, so that, in a case where the calculated loss satisfies a certain condition, it can be determined that the training of the initial channel estimation model is completed and the channel estimation model is obtained; or in a case where the calculated loss satisfies a certain condition, and a predetermined number of training rounds is reached, it can be determined that the training of the initial channel estimation model is completed and the channel estimation model is obtained.

In some embodiments, obtaining the sample input data according to the first format requirement includes: obtaining a sample PDSCH, the sample PDSCH being configured to carry sample data and a sample DMRS signal; performing a channel estimation on a DMRS time-frequency position based on the sample DMRS signal and a sample DMRS sending signal, and obtaining a sample estimation channel value of a DMRS position; and obtaining the sample input data according to the first format requirement, a number of resources of the sample PDSCH, an RE position of the sample data, and the sample DMRS signal; or obtaining the sample input data according to the first format requirement, a number of resources of the sample PDSCH, an RE position of the sample data, and the sample estimation channel value of the DMRS position.

In embodiments of the present disclosure, the terminal device obtains the sample input data according to the first format requirement, and may obtain in advance a sample PDSCH sent by a network side device, the sample PDSCH being configured to carry sample data and a sample DMRS signal, and obtain the sample input data according to the first format requirement, the number of resources of the sample PDSCH, the RE position of the sample data, and the sample DMRS signal.

Alternatively, on the basis of obtaining the sample PDSCH, the sample PDSCH being configured to carry the sample data and the sample DMRS signal, the channel estimation on the DMRS time-frequency position is performed according to the sample DMRS signal and the sample DMRS sending signal, the sample estimation channel value of the DMRS position is obtained, and the sample input data is obtained according to the first format requirement, the number of resources of the sample PDSCH, the RE position of the sample data and the sample estimation channel value of the DMRS position.

A related description of obtaining the sample input data according to the first format requirement, the number of resources of the sample PDSCH, the RE position of the sample data, and the sample DMRS signal may be found in the related descriptions in the embodiments described above, and will not be repeated herein.

A related description of obtaining the sample input data according to the first format requirement, the number of resources of the sample PDSCH, the RE position of the sample data, and the sample estimation channel value of the DMRS position may be found in the related descriptions in the embodiments described above, and will not be repeated herein.

In some embodiments, obtaining the sample output data according to the second format requirement includes: obtaining a channel estimation value label through a field measurement manner; and processing the channel estimation value label according to the second format requirement, and obtaining the sample output data.

In embodiments of the present disclosure, the terminal device obtains the sample output data according to the second format requirement; and may obtain the channel estimation value label through the field measurement manner, and process the channel estimation value label according to the second format requirement to obtain the sample output data.

The second format requirement can be found in the related description in the above embodiments, (the sample input data in the sample data set may be uniformly 14 symbols, or the length of the time domain symbols may be variable, in which case the sample output data (an ideal channel estimation value label) on symbols for which no data transmission is performed can only be obtained through the field measurement manner), and in embodiments of the present disclosure, the channel estimation value label can be obtained through the field measurement manner, and the channel estimation value label may be processed according to the second format requirement to obtain the sample output data.

In some other embodiments, obtaining the sample output data according to the second format requirement includes: determining a channel result estimated according to a correctly decoded transport block (TB) as the channel estimation value label; and processing the channel estimation value label according to the second format requirement, and obtaining the sample output data.

In embodiments of the present disclosure, the terminal device obtains the sample output data according to the second format requirement; and may determine a channel result estimated according to the correctly decoded transport block (TB) as the channel estimation value label; and process the channel estimation value label according to the second format requirement to obtain the sample output data.

The channel result estimated according to the correctly decoded transport block (TB) can be obtained by LS channel estimation, in which, for the actual reception, if the CRC (cyclic redundancy check code) is correctly calibrated, it can be known, through $Y=HX$, that H can be obtained by the channel estimation methods such as LS, MMSE, etc., in a case where Y and X are certain, and this value can be taken as an ideal channel estimation value label, and further, the terminal device can process the channel estimation value label according to the second format requirement to obtain sample output data.

In embodiments of the present disclosure, the sample data set includes a training subdata set, the training subdata set is configured to train the initial channel estimation model, and in a case where the training subdata set is used to train the initial channel estimation model up to a predetermined number of rounds, it can be determined that the training of the initial channel estimation model is completed, and the channel estimation model is obtained, or, furthermore, the loss can be calculated according to the output data obtained from each training, for example, a throughput rate is obtained according to the output data, the loss is calculated, and in a case where the loss reaches a target value, it can be determined that the training of the initial channel estimation model is completed and the channel estimation model is obtained.

In embodiments of the present disclosure, the sample data set includes a validation subdata set in addition to the training subdata set, the training subdata set is configured to train the initial channel estimation model, and the validation subdata set is configured to validate the training process, e.g., after 50 rounds of training the initial channel estimation model using the training subdata set, and the model reaches convergence on the training subdata set, the initial channel estimation model can be validated using the validation subdata set at the same time as the training. It is determined whether the initial channel estimation model converges on the validation subdata set, if it is determined that a convergence effect is achieved, the training subdata set may be continued to be used for training, if it is determined that the convergence effect is not achieved, then the parameter of the initial channel estimation model can be modified, and the training subdata set can be used again for training, which can timely find the problems during the training process to avoid ineffective training. The initial channel estimation model is trained using the training subdata set and the validation subdata set, and determining whether the initial channel estimation model is well trained can be done in the same way as training of the initial channel estimation model using the training subdata set.

In embodiments of the present disclosure, the sample data set includes a test subdata set in addition to the training subdata set, and the test subdata set may test the channel estimation model obtained by training using the training subdata set, and the initial channel estimation model obtained by training using the training subdata set is determined to be a well-trained channel estimation model only if a test result satisfies a preset requirement, and if the test result does not satisfy the preset requirement, it is determined that the initial channel estimation model obtained by training using the training subdata set does not satisfy the requirement at this time, and further training or re-training is required.

In embodiments of the present disclosure, the sample data set includes a test subdata set in addition to the training subdata set and the validation subdata set, and the test subdata set may test the channel estimation model obtained by training using the training subdata set and the validation subdata set, and the initial channel estimation model obtained by training using the training subdata set and the validation subdata set is determined to be a well-trained channel estimation model only if a test result satisfies a preset requirement, and if the test result does not satisfy the preset requirement, it is determined that the initial channel estimation model obtained by training using the training subdata set and the validation subdata set does not satisfy the requirement at this time, and further training or re-training is required.

In some embodiments, obtaining the model input data according to the first format requirement, the number of resources of the PDSCH, the RE position of the data, and the DMRS signal includes:

the DMRS signal being carried in the PDSCH sent by the network side device and received by the terminal device. in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, and obtaining the model input data; and/or
in response to determining that the number of the resources of the PDSCH in the frequency domain is a plurality of RBs, splitting the plurality of RBs into a plurality of single RBs, taking a value of the RE position of the data of each single RB to be 0, and obtaining the model input data of the plurality of single RBs; and/or
in response to determining that the number of the resources of the PDSCH in the spatial domain is a plurality of layers, splitting the plurality of layers into a plurality of single layers, taking a value of the RE position of the data of each single layer to be 0, and obtaining the model input data of the plurality of single layers.

In embodiments of the present disclosure, the model input data is obtained according to the first format requirement, the number of resources of the PDSCH, the RE position of the data, and the DMRS signal, and in a case where in the time domain the number of resources of the PDSCH is less than 14 OFDM symbols, the number of resources of the PDSCH is made up to 14 OFDM symbols, a value of the RE position of the data is taken to be 0, a value of a position corresponding to the made-up OFDM symbol is taken to be 0, a value of a position corresponding to the OFDM symbol of the DMRS signal is taken to be the DMRS signal, and the model input data is obtained.

In embodiments of the present disclosure, the model input data is obtained according to the first format requirement, the number of resources of the PDSCH, the RE position of the data, and the DMRS signal, and in the case where the number of resources of the PDSCH in the frequency domain is a plurality of RBs, the plurality of RBs are split into a plurality of single RBs, a value of the RE position of the data of each single RB is taken to be 0, and the model input data of the plurality of single RBs is obtained.

In embodiments of the present disclosure, the model input data is obtained according to the first format requirement, the number of resources of the PDSCH, the RE position of the data, and the DMRS signal, and in a case where the number of resources of the PDSCH in the spatial domain is a plurality of layers, the plurality of layers are split into a plurality of single layers, a value of the RE position of the data of each single layer is taken to be 0, and the model input data of the plurality of single layers is obtained.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, determining the model input data according to the first format requirement, the number of resources of the PDSCH, the RE position of the data, and the DMRS signal includes: performing a channel estimation on a DMRS time-frequency position based on the DMRS signal and a DMRS sending signal, and obtaining an estimation channel value of a DMRS position; and obtaining the model input data according to the first format requirement, the number of resources of the PDSCH, the RE position of the data, and the estimation channel value of the DMRS position.

In embodiments of the present disclosure, the terminal device receives a PDSCH sent by the network side device, and the PDSCH carries the DMRS signal.

It could be understood that the network side device sends an original sequence of DMRS to the terminal device before sending the PDSCH, and the terminal device can determine the DMRS sending signal sent by the network side device corresponding to the received DMRS signal.

Based on this, in the case of obtaining the DMRS signal and the DMRS sending signal, a channel estimation on the DMRS time-frequency position can be performed according to the DMRS signal and the DMRS sending signal to obtain the estimation channel value of the DMRS position.

In embodiments of the present disclosure, the terminal device may obtain the model input data according to the first format requirement, the number of resources of the PDSCH, the RE position of the data and the estimation channel value of the DMRS position. It includes:

in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, taking a value of a position corresponding to an OFDM symbol of the DMRS signal to be the estimation channel value of the DMRS position, and obtaining the model input data; and/or

in response to determining that the number of the resources of the PDSCH in the frequency domain is a plurality of RBs, splitting the plurality of RBs into a plurality of single RBs, taking a value of the RE position of the data of each single RB to be 0, taking a value of the RE position of the DMRS signal of each single RB to be the estimation channel value of the DMRS position, and obtaining the model input data of the plurality of single RBs; and/or

in response to determining that the number of the resources of the PDSCH in the spatial domain is a plurality of layers, splitting the plurality of layers into a plurality of single layers, taking a value of the RE position of the data of each single layer to be 0, taking a value of the RE position of the DMRS signal to be the estimation channel value of the DMRS position, and obtaining the model input data of the plurality of single layers.

In embodiments of the present disclosure, the model input data is obtained according to the first format requirement, the number of resources of the PDSCH, the RE position of the data, and the estimation channel value of the DMRS position, and in a case where in the time domain the number of resources of the PDSCH is less than 14 OFDM symbols, the number of resources of the PDSCH is made up to 14 OFDM symbols, a value of the RE position of the data is taken to be 0, a value of a position corresponding to the made-up OFDM symbol is taken to be 0, a value of a position corresponding to the OFDM symbol of the DMRS signal is taken to be the estimation channel value of the DMRS position, and the model input data is obtained.

In embodiments of the present disclosure, the model input data is obtained according to the first format requirement, the number of resources of the PDSCH, the RE position of the data, and the estimation channel value of the DMRS position, and in the case where the number of resources of the PDSCH in the frequency domain is a plurality of RBs, the plurality of RBs are split into a plurality of single RBs, a value of the RE position of the data of each single RB is taken to be 0, a value of the RE position of the DMRS signal of each single RB is taken to be the estimation channel value of the DMRS position, and the model input data of the plurality of single RBs is obtained.

In embodiments of the present disclosure, the model input data is obtained according to the first format requirement, the number of resources of the PDSCH, the RE position of the data, and the estimation channel value of the DMRS position, and in a case where the number of resources of the PDSCH in the spatial domain is a plurality of layers, the plurality of layers are split into a plurality of single layers, a value of the RE position of the data of each single layer is taken to be 0, a value of the RE position of the DMRS signal of each single layer is taken to be the sample estimation channel value of the DMRS position, and the model input data of the plurality of single layers is obtained.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, determining the candidate channel estimation result according to the model input data and the channel estimation model includes: inputting the model input data of the plurality of single RBs into the channel estimation model sequentially in a unit of single RB, and determining the candidate channel estimation result; or inputting the model input data of the plurality of single RBs into a plurality of channel estimation models respectively in a unit of single RB for parallel inference, and determining the candidate channel estimation result; or

inputting the model input data of the plurality of single layers into the channel estimation model sequentially in a unit of single layer, and determining the candidate channel estimation result; or inputting the model input data of the plurality of single layers into a plurality of channel estimation models respectively in a unit of single layer for parallel inference, and determining the candidate channel estimation result.

In embodiments of the present disclosure, the candidate channel estimation result is determined according to the model input data and the channel estimation model, and in the case of obtaining the model input data of the plurality of single RBs, the model input data of the plurality of single RBs may be sequentially inputted into the channel estimation model in a unit of single RB, and the candidate channel estimation result is determined.

In embodiments of the present disclosure, the candidate channel estimation result is determined according to the model input data and the channel estimation model, and in the case of obtaining the model input data of the plurality of single RBs, the model input data of the plurality of single RBs may be respectively inputted into the plurality of channel estimation models in a unit of single RB for parallel inference, and the candidate channel estimation result is determined.

In embodiments of the present disclosure, the candidate channel estimation result is determined according to the model input data and the channel estimation model, and in the case of obtaining the model input data of the plurality of single layers, the model input data of the plurality of single layers may be sequentially inputted into the channel estimation model in a unit of single layer, and the candidate channel estimation result is determined.

In embodiments of the present disclosure, the candidate channel estimation result is determined according to the model input data and the channel estimation model, and in the case of obtaining the model input data of the plurality of single layers, the model input data of the plurality of single layers may be respectively inputted into the plurality of channel estimation models in a unit of single layer for parallel inference, and the candidate channel estimation result is determined.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

Referring to FIG. 3, FIG. 3 is a flow chart of another method for channel estimation based on artificial intelligence (AI) provided by an embodiment of the present disclosure.

As shown in FIG. 3, the method is performed by a terminal device, and the method may include, but is not limited to, the following steps:

In S31: a channel estimation model and a first format requirement of input data of the channel estimation model are determined.

In S32: a PDSCH sent by a network side device is received, and the PDSCH is configured to carry data and a DMRS signal.

In S33: model input data is determined according to the first format requirement, a number of resources of the PDSCH, an RE position of the data, and the DMRS signal.

In S34: a candidate channel estimation result is determined according to the model input data and the channel estimation model.

In S35: a channel estimation result is determined according to the RE position of the data and the candidate channel estimation result.

In embodiments of the present disclosure, in a case where the terminal device determines the candidate channel estimation result according to the model input data and the channel estimation model, the terminal device may further determine the channel estimation result according to the RE position of the data and the candidate channel estimation result.

It could be understood that the first format requirement is that one RB is in the frequency domain, and in a case where the number of the resources of the PDSCH in the frequency domain is a plurality of RBs, the plurality of RBs are split into a plurality of single RBs, a value of the RE position of the data of each single RB is taken to be 0, and the model input data of the plurality of single RBs is obtained; and the candidate channel estimation result is determined according to the model input data and the channel estimation model.

By way of example, the model input data includes RB1 data and RB2 data, a candidate channel estimation result is determined according to the model input data and the channel estimation model, and the candidate channel estimation result is determined to include a candidate channel estimation result #1 corresponding to the RB1 data, and a candidate channel estimation result #2 corresponding to the RB2 data.

In this case, the channel estimation result is determined according to the RE position of the data and the candidate channel estimation result, and a candidate channel result 1 of the RE position of the data in the RB1 data can be obtained from the candidate channel estimation result #1 corresponding to the RB1 data, and a candidate channel result 2 of the RE position of the data in the RB1 data can be obtained from the candidate channel estimation result #2 corresponding to the RB2 data, and the candidate channel result 1 and candidate channel result 2 are determined to be channel estimation results.

It could be understood that the first format requirement is that 14 OFDM symbols are in the time domain, and in a case where the number of the resources of the PDSCH is less than 14 OFDM symbols, the number of the resources of the PDSCH is made up to 14 OFDM symbols, a value of the RE position of the data is taken to be 0, a value of a position corresponding to a made-up OFDM symbol is taken to be 0, and the model input data is obtained; and the candidate channel estimation result is determined according to the model input data and the channel estimation model.

By way of example, the PDSCH has a number of resources in the time domain of 10 OFDM symbols, and the make-up of the 14 OFDM symbols can be done by making up 4 OFDM symbols after the 10 OFDM symbols of the number of resources of the PDSCH, or before the 10 OFDM symbols of the number of resources of the PDSCH, or at specific positions between the 10 OFDM symbols of the number of resources of the PDSCH.

Based on this, in a case where the number of resources of the PDSCH is less than 14 OFDM symbols, the number of resources of the PDSCH is made up to 14 OFDM symbols to obtain the model input data, and the candidate channel estimation result is determined according to the model input data and the channel estimation model.

It could be understood that the candidate channel estimation result obtained are also 14 OFDM symbols, and in this case, determining the channel estimation result according to the RE position of the data and the candidate channel estimation result may be that a result of the RE position of the data can be extracted from the candidate channel estimation result of the 14 OFDM symbols, and the channel estimation result can be determined.

It could be understood that the first format requirement is that one layer is in the spatial domain, and in a case where the number of the resources of the PDSCH in the spatial domain is a plurality of layers, the plurality of layers are split into a plurality of single layers, a value of the RE position of the data of each single layer is taken to be 0, and the model input data of the plurality of single layers is obtained; and the candidate channel estimation result is determined according to the model input data and the channel estimation model.

By way of example, the model input data includes layer 1 data and layer 2 data, a candidate channel estimation result is determined according to the model input data and the channel estimation model, and the candidate channel estimation result is determined to include a candidate channel estimation result #1 corresponding to the layer 1 data, and a candidate channel estimation result #2 corresponding to the layer 2 data.

In this case, the channel estimation result is determined according to the RE position of the data and the candidate channel estimation result, and a candidate channel result 1 of the RE position of the data in the RB1 data can be obtained from the candidate channel estimation result #1 corresponding to the layer 1 data, and a candidate channel result 2 of the RE position of the data in the RB1 data can be obtained from the candidate channel estimation result #2 corresponding to the layer 2 data, and the candidate channel result 1 and candidate channel result 2 are determined to be channel estimation results.

By implementing embodiments of the present disclosure, the terminal device receives configuration information sent by the network side device; determines the channel estimation model according to the configuration information; receives a PDSCH sent by the network side device, the PDSCH being configured to carry the data and the DMRS signal; determines the model input data according to the first format requirement, the number of resources of the PDSCH, the RE position of the data, and the DMRS signal; determines the candidate channel estimation result according to the model input data and the channel estimation model; and determine the channel estimation result according to the RE position of the data and the candidate channel estimation result. Thus, the terminal device can use a unified channel estimation model for channel estimation under different DMRS configurations without maintaining a plurality of channel estimation models, which can reduce complexity and overhead.

It should be noted that in embodiments of the present disclosure, S31 to S36 may be implemented alone or in combination with any of the other steps in embodiments of the present disclosure, for example, in combination with S21 to S24 in embodiments of the present disclosure, which is not limited by embodiments of the present disclosure.

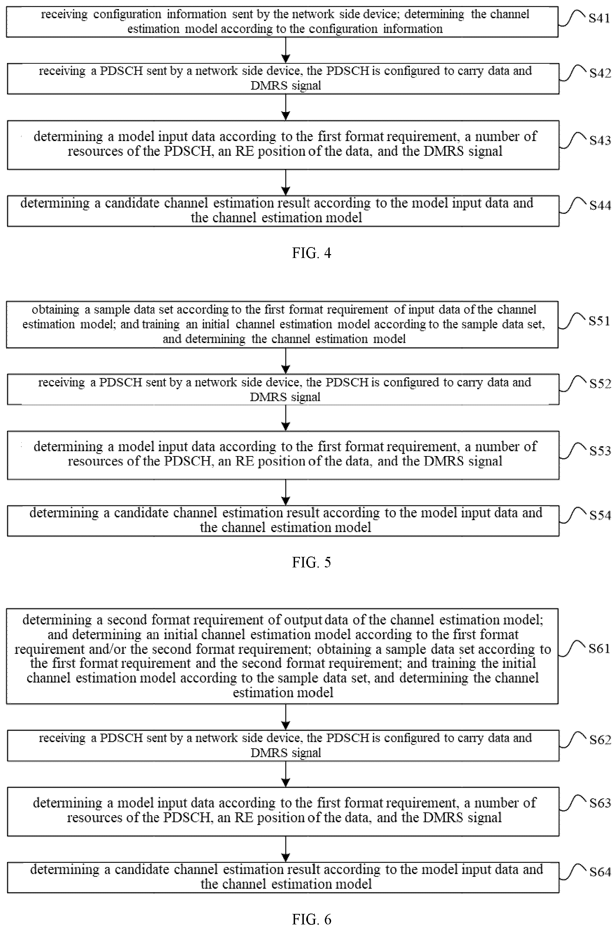

Referring to FIG. 4, FIG. 4 is a flow chart of another method for channel estimation based on artificial intelligence (AI) provided by an embodiment of the present disclosure.

As shown in FIG. 4, the method is performed by a terminal device, and the method may include, but is not limited to, the following steps:

In S41: configuration information sent by the network side device is received; and the channel estimation model is determined according to the configuration information.

The channel estimation model may be obtained by training an initial channel estimation model, the initial channel estimation model is an AI-based model, the initial channel estimation model may be obtained using methods in the related art, or, may be obtained by obtaining an initial model using methods in the related art and structurally improving the initial model, and so on, which is not specifically limited by embodiments of the present disclosure.

In embodiments of the present disclosure, the terminal device may determine the channel estimation model according to the configuration information sent by the network side device.

In embodiments of the present disclosure, the terminal device receives configuration information sent by the network side device, in which the configuration information is configured to indicate the channel estimation model, or the configuration information is configured to indicate a relevant configuration or structural parameter, etc., of the channel estimation model. Thus, the terminal device may determine the channel estimation model according to the configuration information of the network side device.

In a case where the configuration information is configured to indicate the channel estimation model, the network side device may train an initial channel estimation model to obtain the channel estimation model, and then send the channel estimation model to the terminal device through the configuration information.

In a case where the configuration information is configured to indicate the structural parameter of the channel estimation model, the network side device may indicate a relevant configuration or structural parameter, etc., of the channel estimation model to the terminal device, and the terminal device may determine the channel estimation model according to the configuration information after receiving the configuration information sent by the network side device. The network side device may train the initial channel estimation model to obtain the channel estimation model, and thus indicate related configuration or structural parameter of the channel estimation model, etc., to the terminal device.

In S42: a PDSCH sent by a network side device is received, and the PDSCH is configured to carry data and a DMRS signal.

In S43: model input data is determined according to the first format requirement, a number of resources of the PDSCH, an RE position of the data, and the DMRS signal.

In S44: a candidate channel estimation result is determined according to the model input data and the channel estimation model.

The related description of S42 to S44 can be found in the above embodiments and will not be repeated here.

By implementing embodiments of the present disclosure, the terminal device receives the configuration information sent by the network side device; determines the channel estimation model according to the configuration information; receives a PDSCH sent by the network side device, the PDSCH being configured to carry the data and the DMRS signal; determines model input data according to the first format requirement, the number of resources of the PDSCH, the RE position of the data, and the DMRS signal; and determines the candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

It should be noted that in embodiments of the present disclosure, S41 to S44 may be implemented alone or in combination with any of the other steps in embodiments of the present disclosure, for example, in combination with S21 to S24 in embodiments of the present disclosure, which is not limited by embodiments of the present disclosure.

Referring to FIG. 5, FIG. 5 is a flow chart of yet another method for a channel estimation based on artificial intelligence (AI) provided by an embodiment of the present disclosure.

As shown in FIG. 5, the method is performed by a terminal device, and the method may include, but is not limited to, the following steps:

In S51: a sample data set is obtained according to a first format requirement of input data of a channel estimation model; an initial channel estimation model is trained according to the sample data set, and the channel estimation model is determined.

In embodiments of the present disclosure, the terminal device obtains the sample data set satisfying the first format requirement according to the first format requirement of the input data of the channel estimation model, and trains the initial channel estimation model according to the sample data set and determines the channel estimation model.

The initial channel estimation model is trained according to the sample data set to determine the channel estimation model, which may be trained based on self-supervised learning, and training data in the sample data set satisfying the first format requirement is input to the initial channel estimation model, the initial channel estimation model is trained, and the channel estimation model is then determined.

It should be noted that, in embodiments of the present disclosure, the initial channel estimation model may adopt an AI model in the related art, in which the terminal device, after obtaining the training data input to the AI model from the sample data set satisfying the first format requirement, performs training based on the self-supervised learning to determine the channel estimation model.

Of course, in a case where the AI model in the related art is unable to satisfy training according to the training data in the sample data set of the first format requirement, embodiments of the present disclosure may also improve the AI model in the related art according to the first format requirement.

In some embodiments, the terminal device determines a second format requirement of output data of the channel estimation model; an initial channel estimation model is determined according to the first format requirement and/or the second format requirement.

In embodiments of the present disclosure, the terminal device determines the first format requirement of the input data of the channel estimation model and the second format requirement of the output data of the channel estimation model, determines the initial channel estimation model according to the first format requirement and/or the second format requirement, and may improve the structure, parameter, and other information of the AI model in the related art according to the first format requirement and/or the second format requirement to determine the initial channel estimation model.

In some embodiments, the second format requirement includes at least one of:

N RBs being in a frequency domain, where N is a positive integer;

M OFDM symbols being in a time domain, where M is a positive integer; and

L layers being in a spatial domain, where L is a positive integer.

In embodiments of the present disclosure, the second format requirement may be that N RBs are in the frequency domain, e.g., 1 RB.

In embodiments of the present disclosure, the second format requirement may be that M OFDM symbols are in the time domain, e.g., 14 orthogonal frequency division multiplexing (OFDM) symbols.

In embodiments of the present disclosure, the second format requirement may be that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the sample data set includes sample input data, in which obtaining the sample data set according to the first format requirements includes: obtaining a sample PDSCH, the sample PDSCH being configured to carry the sample data and the sample DMRS signal; performing channel estimation on the DMRS time-frequency position based on the sample DMRS signal and the sample DMRS sending signal to obtain a sample estimation channel value of the DMRS position; obtaining sample input data according to the first format requirement, the number of resources of the sample PDSCH, the RE position of the sample data, and the sample DMRS signal; or obtaining sample input data according to the first format requirement, the sample data, and the sample estimation channel value of the DMRS position.

In a possible implementation, the sample data set includes sample input data, and the terminal device obtains the sample data set according to the first format requirement, and may obtain the sample PDSCH sent by the network side device in advance; and obtains the sample input data according to the first format requirement, the number of resources of the sample PDSCH, the RE position of the sample data, and the sample DMRS signal.

In embodiments of the present disclosure, the terminal device obtains the sample PDSCH, which may be that the PDSCH sent by the network side device is received and pre-stored, and in a case of needing to obtain a sample data set, the pre-stored sample PDSCH may be obtained directly, or may also be obtained in other ways, which are not specifically limited by embodiments of the present disclosure.

It could be understood that in embodiments of the present disclosure, the sample data set includes the sample input data, and the sample input data may be determined directly according to the first format requirement, the number of resources of the sample PDSCH, the RE position of the sample data, and the sample DMRS signal.

The terminal device receives the sample PDSCH sent by the network side device, and the sample DMRS signal is carried in the sample PDSCH.

It could be understood that the sample data set may include a plurality of sets of sample input data, and the plurality of sets of sample input data may be obtained according to the first format requirement, the plurality of sets of sample data sent by the network side device, and the sample DMRS signal.

A related description of obtaining the sample input data according to the first format requirement, the number of resources of the sample PDSCH, the RE position of the sample data, and the sample DMRS signal may be found in the related descriptions in the embodiments described above, and will not be repeated herein.

In another possible implementation, the sample data set includes sample input data, and the terminal device obtains the sample data set according to the first format requirement, and may obtain the sample PDSCH in advance, the sample PDSCH being configured to carry the sample data and the sample DMRS signal; performs channel estimation on the DMRS time-frequency position according to the sample DMRS signal and the sample DMRS sending signal, obtains the sample estimation channel value of the DMRS position, and obtains the sample input data according to the first format requirement, the number of resources of the sample PDSCH, the RE position of the sample data, and the sample estimation channel value of the DMRS position.

In embodiments of the present disclosure, the terminal device obtains the sample PDSCH, which may be that the PDSCH sent by the network side device is received and pre-stored, and in a case of needing to obtain a sample data set, the pre-stored sample PDSCH may be obtained directly, or may also be obtained in other ways, which are not specifically limited by embodiments of the present disclosure.

The terminal device receives the sample PDSCH sent by the network side device, and the sample DMRS signal is carried in the sample PDSCH.

It could be understood that the network side device sends an original sequence of DMRS to the terminal device before sending the sample PDSCH, and the terminal device can determine the sample DMRS sending signal sent by the network side device corresponding to the received sample DMRS signal.

Based on this, in a case where the sample DMRS signal and the sample DMRS sending signal are obtained, the channel estimation on the DMRS time-frequency position can be performed according to the sample DMRS signal and the sample DMRS sending signal, and the sample estimation channel value of the DMRS position can be obtained.

In embodiments of the present disclosure, the sample data set includes the sample input data, and the terminal device obtains the sample input data according to the first format requirement; and may obtain the sample input data according to the first format requirement, the number of resources of the sample PDSCH, the RE position of the sample data, and sample estimation channel value of the DMRS position.

A related description of obtaining the sample input data according to the first format requirement, the number of resources of the sample PDSCH, the RE position of the sample data, and the sample estimation channel value of the DMRS position may be found in the related descriptions in the embodiments described above, and will not be repeated herein.

Based on this, on the basis of determining the initial channel estimation model, and the sample data set, the determined initial channel estimation model can be trained according to the sample data set to obtain the channel estimation model.

In S52: a PDSCH sent by a network side device is received, and the PDSCH is configured to carry data and a DMRS signal.

In S53: model input data is determined according to the first format requirement, a number of resources of the PDSCH, an RE position of the data, and the DMRS signal.

In S54: a candidate channel estimation result is determined according to the model input data and the channel estimation model.

The related description of S52 to S54 can be found in the related description of the above embodiments and will not be repeated here.

By implementing embodiments of the present disclosure, the terminal device obtains a sample data set according to the first format requirement of input data of the channel estimation model; trains an initial channel estimation model according to the sample data set, and determines a channel estimation model; receives a PDSCH sent by a network side device, the PDSCH being configured to carry the data and the DMRS signal; determines model input data according to the first format requirement, the number of resources of the PDSCH, the RE position of the data and the DMRS signal; and determines a candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

It should be noted that in embodiments of the present disclosure, S51 to S54 may be implemented alone or in combination with any of the other steps in embodiments of the present disclosure, for example, in combination with S21 to S24 in embodiments of the present disclosure, which is not limited by embodiments of the present disclosure.

Referring to FIG. 6, FIG. 6 is a flow chart of yet another method for a channel estimation based on artificial intelligence (AI) provided by an embodiment of the present disclosure.

As shown in FIG. 6, the method is performed by a terminal device, and the method may include, but is not limited to, the following steps:

In S61: a second format requirement of output data of the channel estimation model is determined; an initial channel estimation model is determined according to the first format requirement and/or the second format requirement; a sample data set is obtained according to the first format requirement and the second format requirement; and the initial channel estimation model is trained according to the sample data set, and the channel estimation model is determined.

In embodiments of the present disclosure, the terminal device may train the initial channel estimation model and thus determine the channel estimation model.

It could be understood that the initial channel estimation model may be an AI model in the related art, and the terminal device may train the initial channel estimation model that is the AI model in the related art to obtain the channel estimation model.

However, in the channel estimation model, the input data has a first format requirement and/or the output data has a second format requirement. In this case, the AI model in the related art may not be used as an initial channel estimation model, and it may also be understood that the channel estimation model cannot be obtained by directly training the initial channel estimation model that is the AI model in the related art.

Based on this, in embodiments of the present disclosure, the initial channel estimation model may be determined according to the first format requirement and/or the second format requirement, in which the structure, parameter, and other related configurations of the AI model in the related art may be improved according to the first format requirement and/or the second format requirement, thereby obtaining the initial channel estimation model.

Afterwards, the terminal device determines the initial channel estimation model, and also needs to obtain a sample data set satisfying the first format requirement and the second format requirement, and after obtaining the sample data set, the initial channel estimation model may be trained according to the sample data set to obtain the channel estimation model.

In some embodiments, the sample data set includes sample input data and sample output data, and obtaining the sample data set according to the first format requirement and the second format requirement includes: obtaining the sample input data according to the first format requirement; and obtaining the sample output data according to the second format requirement.

In some embodiments, the sample data set includes sample input data and sample output data, the sample input data is obtained according to the first format requirement and satisfies the first format requirement, and the sample output data is obtained according to the second format requirement and satisfies the second format requirement.

In embodiments of the present disclosure, the initial channel estimation model is trained according to the sample dataset, the channel estimation model is determined, which may be that the sample input data is input to the initial channel estimation model, the training output data is obtained, and a loss is calculated according to the training output data and the sample output data to update the parameter of the initial channel estimation model, and thus the channel estimation model is obtained.

The sample data set may include a plurality of sets of sample input data and sample output data, and the plurality of sets of sample input data and sample output data are used to train the initial channel estimation model in the manner described above, so that, in a case where the calculated loss satisfies a certain condition, it can be determined that the training of the initial channel estimation model is completed and the channel estimation model is obtained.

In some embodiments, the second format requirement includes at least one of:

N RBs being in a frequency domain, where N is a positive integer;

M OFDM symbols being in a time domain, where M is a positive integer; and

L layers being in a spatial domain, where L is a positive integer.

In embodiments of the present disclosure, the second format requirement may be that N RBs are in the frequency domain, e.g., 1 RB.

In embodiments of the present disclosure, the second format requirement may be that M OFDM symbols are in the time domain, e.g., 14 orthogonal frequency division multiplexing (OFDM) symbols.

In embodiments of the present disclosure, the second format requirement may be that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

A related description of obtaining the sample input data according to the first format requirement may be found in the related description in the embodiments described above, and will not be repeated herein.

In some embodiments, obtaining the sample output data according to the second format requirement includes: obtaining a channel estimation value label through a field measurement manner; and processing the channel estimation value label according to the second format requirement, and obtaining the sample output data.

In embodiments of the present disclosure, the terminal device obtains the sample output data according to the second format requirement; and may obtain the channel estimation value label through the field measurement manner, and process the channel estimation value label according to the second format requirement to obtain the sample output data.

The second format requirement can be found in the related description in the above embodiments, (the sample input data in the sample data set may be uniformly 14 symbols, or the length of the time domain symbols may be variable, in which case the sample output data (an ideal channel estimation value label) on symbols for which no data transmission is performed can only be obtained through the field measurement manner), and in embodiments of the present disclosure, the channel estimation value label can be obtained through the field measurement manner, and the channel estimation value label may be processed according to the second format requirement to obtain the sample output data.

In some other embodiments, obtaining the sample output data according to the second format requirement includes: determining a channel result estimated according to a correctly decoded transport block (TB) as the channel estimation value label; and processing the channel estimation value label according to the second format requirement, and obtaining the sample output data.

In embodiments of the present disclosure, the terminal device obtains the sample output data according to the second format requirement; and may determine a channel result estimated according to the correctly decoded transport block (TB) as the channel estimation value label; and process the channel estimation value label according to the second format requirement to obtain the sample output data.

The channel result estimated according to the correctly decoded transport block (TB) can be obtained by LS channel estimation, in which, for the actual reception, if the CRC (cyclic redundancy check code) is correctly calibrated, it can be known, through Y=HX, that H can be obtained by the channel estimation methods such as LS, MMSE, etc., in a case where Y and X are certain, and this value can be taken as an ideal channel estimation value label, and further, the terminal device can process the channel estimation value label according to the second format requirement to obtain the sample output data.

Based on this, on the basis of determining the initial channel estimation model, and the sample data set, the determined initial channel estimation model can be trained according to the sample data set to obtain the channel estimation model.

In S62: a PDSCH sent by a network side device is received, and the PDSCH is configured to carry data and a DMRS signal.

In S63: model input data is determined according to the first format requirement, a number of resources of the PDSCH, an RE position of the data, and the DMRS signal.

In S64: a candidate channel estimation result is determined according to the model input data and the channel estimation model.

The related description of S62 to S64 can be found in the related description of the above embodiments and will not be repeated here.

By implementing embodiments of the present disclosure, the terminal device determines the second format requirement of the output data of the channel estimation model; determines an initial channel estimation model according to the first format requirement and/or the second format requirement; obtains a sample data set according to the first format requirement and the second format requirement; trains the initial channel estimation model according to the sample data set, and determines the channel estimation model; receives a PDSCH sent by the network side device, the PDSCH being configured to carry data and a DMRS signal; determines model input data according to the first format requirement, the number of resources of the PDSCH, the RE position of the data, and the DMRS signal; and determines a candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

It should be noted that in embodiments of the present disclosure, S61 to S64 may be implemented alone or in combination with any of the other steps in embodiments of the present disclosure, for example, in combination with S21 to S24 in embodiments of the present disclosure, which is not limited by embodiments of the present disclosure.

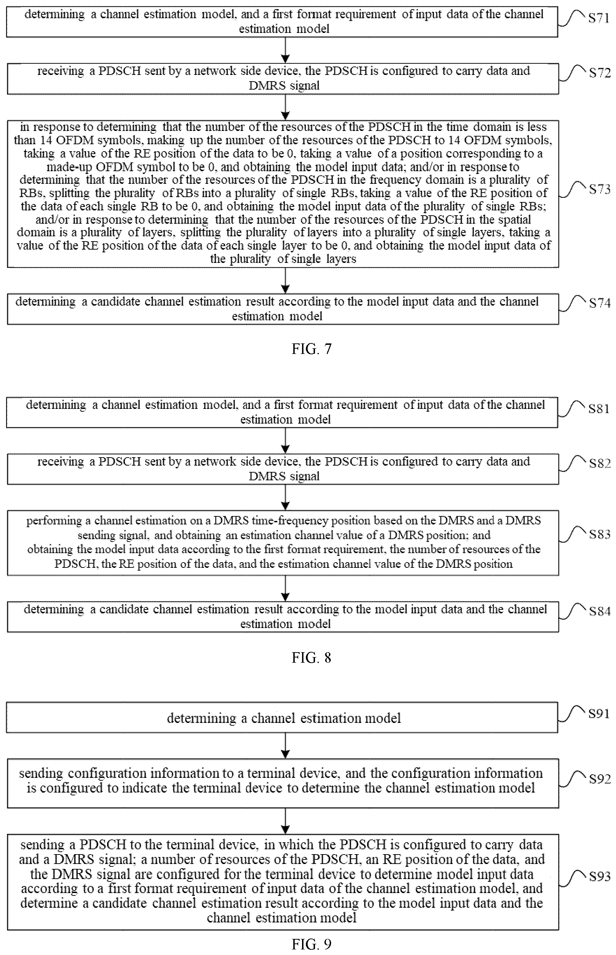

Referring to FIG. 7, FIG. 7 is a flow chart of yet another method for a channel estimation based on artificial intelligence (AI) provided by an embodiment of the present disclosure.

As shown in FIG. 7, the method is performed by a terminal device, and the method may include, but is not limited to, the following steps:

In S71: a channel estimation model and a first format requirement of input data of the channel estimation model are determined.

In S72: a PDSCH sent by a network side device is received, and the PDSCH is configured to carry data and a DMRS signal.

The related description of S71 to S72 can be found in the related description of the above embodiments and will not be repeated here.

In S73: in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, and obtaining the model input data; and/or

in response to determining that the number of the resources of the PDSCH in the frequency domain is a plurality of RBs, splitting the plurality of RBs into a plurality of single RBs, taking a value of the RE position of the data of each single RB to be 0, and obtaining the model input data of the plurality of single RBs; and/or

in response to determining that the number of the resources of the PDSCH in the spatial domain is a plurality of layers, splitting the plurality of layers into a plurality of single layers, taking a value of the RE position of the data of each single layer to be 0, and obtaining the model input data of the plurality of single layers.

In embodiments of the present disclosure, in a case where in the time domain the number of resources of the PDSCH is less than 14 OFDM symbols, the number of resources of the PDSCH is made up to 14 OFDM symbols, a value of the RE position of the data is taken to be 0, a value of a position corresponding to the made-up OFDM symbol is taken to be 0, a value of a position corresponding to the OFDM symbol of the DMRS signal is taken to be the DMRS signal, and the model input data is obtained.

In embodiments of the present disclosure, in the case where the number of resources of the PDSCH in the frequency domain is a plurality of RBs, the plurality of RBs are split into a plurality of single RBs, a value of the RE position of the data of each single RB is taken to be 0, and the model input data of the plurality of single RBs is obtained.

In embodiments of the present disclosure, in a case where the number of resources of the PDSCH in the spatial domain is a plurality of layers, the plurality of layers are split into a plurality of single layers, a value of the RE position of the data of each single layer is taken to be 0, and the model input data of the plurality of single layers is obtained.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In S74: a candidate channel estimation result is determined according to the model input data and the channel estimation model.

In some embodiments, determining the candidate channel estimation result according to the model input data and the channel estimation model includes: inputting the model input data of the plurality of single RBs into the channel estimation model sequentially in a unit of single RB, and determining the candidate channel estimation result; or inputting the model input data of the plurality of single RBs into a plurality of channel estimation models respectively in a unit of single RB for parallel inference, and determining the candidate channel estimation result; or

inputting the model input data of the plurality of single layers into the channel estimation model sequentially in a unit of single layer, and determining the candidate channel estimation result; or inputting the model input data of the plurality of single layers into a plurality of channel estimation models respectively in a unit of single layer for parallel inference, and determining the candidate channel estimation result.

In embodiments of the present disclosure, the candidate channel estimation result is determined according to the model input data and the channel estimation model, and in the case of obtaining the model input data of the plurality of single RBs, the model input data of the plurality of single RBs may be sequentially inputted into the channel estimation model in a unit of single RB, and the candidate channel estimation result is determined.

In embodiments of the present disclosure, the candidate channel estimation result is determined according to the model input data and the channel estimation model, and in the case of obtaining the model input data of the plurality of single RBs, the model input data of the plurality of single RBs may be respectively inputted into the plurality of channel estimation models in a unit of single RB for parallel inference, and the candidate channel estimation result is determined.

In embodiments of the present disclosure, the candidate channel estimation result is determined according to the model input data and the channel estimation model, and in the case of obtaining the model input data of the plurality of single layers, the model input data of the plurality of single layers may be sequentially inputted into the channel estimation model in a unit of single layer, and the candidate channel estimation result is determined.

In embodiments of the present disclosure, the candidate channel estimation result is determined according to the model input data and the channel estimation model, and in the case of obtaining the model input data of the plurality of single layers, the model input data of the plurality of single layers may be respectively inputted into the plurality of channel estimation models in a unit of single layer for parallel inference, and the candidate channel estimation result is determined.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

By implementing embodiments of the present disclosure, the terminal device determines the channel estimation model and the first format requirement of the input data of the channel estimation model; receives a PDSCH sent by the network side device, the PDSCH being configured to carry the data and the DMRS signal; in response to determining that the number of the resources of the PDSCH in the time domain is less than 14 OFDM symbols, makes up the number of the resources of the PDSCH to 14 OFDM symbols, takes a value of the RE position of the data to be 0, takes a value of a position corresponding to a made-up OFDM symbol to be 0, and obtains the model input data; and/or in response to determining that the number of the resources of the PDSCH in the frequency domain is a plurality of RBs, splits the plurality of RBs into a plurality of single RBs, takes a value of the RE position of the data of each single RB to be 0, and obtains the model input data of the plurality of single RBs; and/or in response to determining that the number of the resources of the PDSCH in the spatial domain is a plurality of layers, splits the plurality of layers into a plurality of single layers, takes a value of the RE position of the data of each single layer to be 0, and obtains the model input data of the plurality of single layers; and determines the candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

It should be noted that in embodiments of the present disclosure, S71 to S74 may be implemented alone or in combination with any of the other steps in embodiments of the present disclosure, for example, in combination with S21 to S24 and/or S31 to S34 and/or S41 to S44 and/or S51 to S54 and/or S61 to S64 in embodiments of the present disclosure, which is not limited by embodiments of the present disclosure.

Referring to FIG. 8, FIG. 8 is a flow chart of yet another method for a channel estimation based on artificial intelligence (AI) provided by an embodiment of the present disclosure.

As shown in FIG. 8, the method is performed by a terminal device, and the method may include, but is not limited to, the following steps:

In S81: a channel estimation model and a first format requirement of input data of the channel estimation model are determined.

In S82: a PDSCH sent by a network side device is received, and the PDSCH is configured to carry data and a DMRS signal.

The related description of S81 to S82 can be found in the related description of the above embodiments and will not be repeated here.

In S83: the channel estimation on the DMRS time-frequency position is performed based on the DMRS signal and the DMRS sending signal, and an estimation channel value of the DMRS position is obtained; and the model input data is obtained according to the first format requirement, the number of resources of the PDSCH, the RE position of the data, and the estimation channel value of the DMRS position.

In embodiments of the present disclosure, the terminal device receives a PDSCH sent by the network side device, and the PDSCH carries the DMRS signal.

It could be understood that the network side device sends an original sequence of DMRS to the terminal device before sending the PDSCH, and the terminal device can determine the DMRS sending signal sent by the network side device corresponding to the received DMRS signal.

Based on this, in the case of obtaining the DMRS signal and the DMRS sending signal, a channel estimation on the DMRS time-frequency position can be performed according to the DMRS signal and the DMRS sending signal to obtain the estimation channel value of the DMRS position.

Obtaining the model input data according to the first format requirement, the number of resources of the PDSCH, the RE position of the data, and the estimation channel value of the DMRS position includes:

in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, taking a value of a position corresponding to an OFDM symbol of the DMRS signal to be the estimation channel value of the DMRS position, and obtaining the model input data; and/or

in response to determining that the number of the resources of the PDSCH in the frequency domain is a plurality of RBs, splitting the plurality of RBs into a plurality of single RBs, taking a value of the RE position of the data of each single RB to be 0, taking a value of the RE position of the DMRS signal of each single RB to be the estimation channel value of the DMRS position, and obtaining the model input data of the plurality of single RBs; and/or

in response to determining that the number of the resources of the PDSCH in the spatial domain is a plurality of layers, splitting the plurality of layers into a plurality of single layers, taking a value of the RE position of the data of each single layer to be 0, taking a value of the RE position of the DMRS signal to be the estimation channel value of the DMRS position, and obtaining the model input data of the plurality of single layers.

In embodiments of the present disclosure, the model input data is obtained according to the first format requirement, the number of resources of the PDSCH, the RE position of the data, and the estimation channel value of the DMRS position, and in a case where in the time domain the number of resources of the PDSCH is less than 14 OFDM symbols, the number of resources of the PDSCH is made up to 14 OFDM symbols, a value of the RE position of the data is taken to be 0, a value of a position corresponding to the made-up OFDM symbol is taken to be 0, a value of a position corresponding to the OFDM symbol of the DMRS signal is taken to be the estimation channel value of the DMRS position, and the model input data is obtained.

In embodiments of the present disclosure, the model input data is obtained according to the first format requirement, the number of resources of the PDSCH, the RE position of the data, and the estimation channel value of the DMRS position, and in the case where the number of resources of the PDSCH in the frequency domain is a plurality of RBs, the plurality of RBs are split into a plurality of single RBs, a value of the RE position of the data of each single RB is taken to be 0, a value of the RE position of the DMRS signal of each single RB is taken to be the estimation channel value of the DMRS position, and the model input data of the plurality of single RBs is obtained.

In embodiments of the present disclosure, the model input data is obtained according to the first format requirement, the number of resources of the PDSCH, the RE position of the data, and the estimation channel value of the DMRS position, and in a case where the number of resources of the PDSCH in the spatial domain is a plurality of layers, the plurality of layers are split into a plurality of single layers, a value of the RE position of the data of each single layer is taken to be 0, a value of the RE position of the DMRS signal of each single layer is taken to be the sample estimation channel value of the DMRS position, and the model input data of the plurality of single layers is obtained.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In S84: a candidate channel estimation result is determined according to the model input data and the channel estimation model.

In some embodiments, determining the candidate channel estimation result according to the model input data and the channel estimation model includes: inputting the model input data of the plurality of single RBs into the channel estimation model sequentially in a unit of single RB, and determining the candidate channel estimation result; or inputting the model input data of the plurality of single RBs into a plurality of channel estimation models respectively in a unit of single RB for parallel inference, and determining the candidate channel estimation result; or

inputting the model input data of the plurality of single layers into the channel estimation model sequentially in a unit of single layer, and determining the candidate channel estimation result; or inputting the model input data of the plurality of single layers into a plurality of channel estimation models respectively in a unit of single layer for parallel inference, and determining the candidate channel estimation result.

In embodiments of the present disclosure, the candidate channel estimation result is determined according to the model input data and the channel estimation model, and in the case of obtaining the model input data of the plurality of single RBs, the model input data of the plurality of single RBs may be sequentially inputted into the channel estimation model in a unit of single RB, and the candidate channel estimation result is determined.

In embodiments of the present disclosure, the candidate channel estimation result is determined according to the model input data and the channel estimation model, and in the case of obtaining the model input data of the plurality of single RBs, the model input data of the plurality of single RBs may be respectively inputted into the plurality of channel estimation models in a unit of single RB for parallel inference, and the candidate channel estimation result is determined.

In embodiments of the present disclosure, the candidate channel estimation result is determined according to the model input data and the channel estimation model, and in the case of obtaining the model input data of the plurality of single layers, the model input data of the plurality of single layers may be sequentially inputted into the channel estimation model in a unit of single layer, and the candidate channel estimation result is determined.

In embodiments of the present disclosure, the candidate channel estimation result is determined according to the model input data and the channel estimation model, and in the case of obtaining the model input data of the plurality of single layers, the model input data of the plurality of single layers may be respectively inputted into the plurality of channel estimation models in a unit of single layer for parallel inference, and the candidate channel estimation result is determined.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

By implementing embodiments of the present disclosure, the terminal device determines the channel estimation model, and the first format requirement of the input data of the channel estimation model; receives the PDSCH sent by the network side device, the PDSCH being configured to carry the data and the DMRS signal; and performs the channel estimation at a DMRS time-frequency position based on the DMRS signal and the DMRS sending signal, and obtains the estimation channel value of the DMRS position; obtains the model input data according to the first format requirement, the number of resources of the PDSCH, the RE position of the data, and the estimation channel value of the DMRS position; and determines the candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

It should be noted that in embodiments of the present disclosure, S81 to S84 may be implemented alone or in combination with any of the other steps in embodiments of the present disclosure, for example, in combination with S21 to S24 and/or S31 to S34 and/or S41 to S44 and/or S51 to S54 and/or S61 to S64 in embodiments of the present disclosure, which is not limited by embodiments of the present disclosure.

Referring to FIG. 9, FIG. 9 is a flow chart of yet another method for a channel estimation based on artificial intelligence (AI) provided by an embodiment of the present disclosure.

As shown in FIG. 9, the method is performed by a network side device, and the method may include, but is not limited to, the following steps:

In S91: a channel estimation model is determined.

In S92: configuration information is sent to a terminal device, and the configuration information is configured to indicate the terminal device to determine the channel estimation model.

In embodiments of the present disclosure, the network side device determines the channel estimation model, and sends the configuration information to the terminal device, to indicate the terminal device to determine the channel estimation model.

The configuration information is configured to indicate the channel estimation model, or, the configuration information is configured to indicate a related configuration or structural parameter of the channel estimation model, etc., and thus the terminal device may determine the channel estimation model according to the configuration information of the network side device.

In a case where the configuration information is configured to indicate the channel estimation model, the network side device may train the channel estimation model to obtain the channel estimation model, and then send the channel estimation model to the terminal device via the configuration information.

In a case where the configuration information is configured to indicate the structural parameter of the channel estimation model, the network side device may indicate a relevant configuration or structural parameter, etc., of the channel estimation model to the terminal device, and the terminal device may determine the channel estimation model according to the configuration information after receiving the configuration information sent by the network side device. The network side device may train the channel estimation model to obtain the channel estimation model, and then indicates, for example, relevant configuration or structural parameter of the channel estimation model to the terminal device.

In S93: a PDSCH is sent to the terminal device, the PDSCH is configured to carry data and a DMRS signal; a number of resources of the PDSCH, an RE position of the data, and the DMRS signal are configured for the terminal device to determine model input data, and a candidate channel estimation result is determined according to the model input data and the channel estimation model.

In embodiments of the present disclosure, the network side device sends the PDSCH to the terminal device, the PDSCH is configured to carry the data and the DMRS signal, and the terminal device, after receiving the data and the DMRS signal sent by the network side device, may determine the model input data according to the first format requirement of the input data of the channel estimation model, in which the data and the DMRS signal sent by the network side device are obtained, and the model input data is obtained according to the first format requirement, the number of resources of the PDSCH, the RE position of the data, and the DMRS signal.

Alternatively, the terminal device, on the basis of receiving the data and the DMRS signal sent by the network side device, performs the channel estimation on the DMRS time-frequency position according to the DMRS signal and the DMRS sending signal, obtains an estimation channel value of the DMRS position, and may obtain the model input data according to the first format requirement of the input data of the channel estimation model, the number of resources of the PDSCH, the RE position of the data, and the estimation channel value of the DMRS position.

Based on this, the terminal device may determine the candidate channel estimation result according to the model input data and the channel estimation model in the case of obtaining the model input data.

In some embodiments, the first format requirement includes at least one of:

N RBs being in a frequency domain, where N is a positive integer;
M OFDM symbols being in a time domain, where M is a positive integer; and
L layers being in a spatial domain, where L is a positive integer.

In embodiments of the present disclosure, the first format requirement is that N RBs are in the frequency domain, e.g., 1 resource block (RB).

In embodiments of the present disclosure, the first format requirement is that M OFDM symbols are in the time domain, e.g., 14 orthogonal frequency division multiplexing (OFDM) symbols.

In embodiments of the present disclosure, the first format requirement is that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

By implementing embodiments of the present disclosure, the network side device determines the channel estimation model; sends the configuration information to the terminal device, in which the configuration information is configured to indicate the terminal device to determine the channel estimation model; sends the PDSCH to the terminal device, the PDSCH being configured to carry the data and the DMRS signal, in which a number of resources of the PDSCH, an RE position of the data, and the DMRS signal are configured for the terminal device to determine the model input data according to the first format requirement of the input data of the channel estimation model, and determine the candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

In some embodiments, the network side device determining the trained initial channel estimation model includes: obtaining a sample data set according to the first format requirement; and training an initial channel estimation model according to the sample data set and determining the channel estimation model.

In embodiments of the present disclosure, the network side device determines the channel estimation model, which may be determined by training the initial channel estimation model, in which the network side device first obtains the sample data set satisfying the first format requirement according to the first format requirement of the input data, and trains the initial channel estimation model according to the sample data set and determines the channel estimation model.

The initial channel estimation model is trained according to the sample data set to determine the channel estimation model, which may be trained based on self-supervised learning, and training data in the sample data set satisfying the first format requirement is input to the initial channel estimation model, the initial channel estimation model is trained, and the channel estimation model is then determined.

It should be noted that, in embodiments of the present disclosure, the initial channel estimation model may adopt an AI model in the related art, and the network side device, after obtaining the training data input to the AI model from the sample data set satisfying the first format requirement, performs the training based on the self-supervised learning to determine the channel estimation model.

Of course, in a case where the AI model in the related art is unable to satisfy training according to the training data in the sample data set of the first format requirement, embodiments of the present disclosure may also improve the AI model in the related art according to the first format requirement.

In some embodiments, the network side device determines a second format requirement of output data of the channel estimation model; and determines an initial channel estimation model according to the first format requirement and/or the second format requirement.

In embodiments of the present disclosure, the network side device determines the first format requirement of the input data of the channel estimation model and the second format requirement of the output data of the channel estimation model, determines the initial channel estimation model according to the first format requirement and/or the second format requirement, and may improve the structure, parameter, and other information of the AI model in the related art according to the first format requirement and/or the second format requirement to determine the initial channel estimation model.

Based on this, on the basis of determining the initial channel estimation model, and the sample data set, the determined initial channel estimation model can be trained according to the sample data set to obtain the channel estimation model.

In some embodiments, the second format requirement includes at least one of:

N RBs being in a frequency domain, where N is a positive integer;
M OFDM symbols being in a time domain, where M is a positive integer; and
L layers being in a spatial domain, where L is a positive integer.

In embodiments of the present disclosure, the second format requirement may be that N RBs are in the frequency domain, e.g., 1 RB.

In embodiments of the present disclosure, the second format requirement may be that M OFDM symbols are in the time domain, e.g., 14 orthogonal frequency division multiplexing (OFDM) symbols.

In embodiments of the present disclosure, the second format requirement may be that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the sample data set includes the sample input data, in which obtaining the sample data set according to the first format requirement includes: obtaining a sample PDSCH, the sample PDSCH being configured to carry the sample data and the sample DMRS signal; obtaining a sample DMRS sending signal corresponding to the sample DMRS signal; performing a channel estimation on the DMRS time-frequency position according to the sample DMRS signal and the sample DMRS sending signal, and obtaining a sample estimation channel value of the DMRS position; obtaining sample input data according to the first format requirement, the number of resources of the sample PDSCH, the RE position of the sample data, and the sample DMRS signal; or obtaining sample input data according to the first format requirement, the sample data, and the sample estimation channel value of the DMRS position.

In a possible implementation, the sample data set includes the sample input data, and the terminal device obtains the sample data set according to the first format requirement, and may obtains the sample PDSCH sent by the network side device in advance, the sample PDSCH being configured to carry the sample data and the sample DMRS signal; and obtains the sample input data according to the first format requirement, the number of resources of the sample PDSCH, the RE position of the sample data, and the sample DMRS signal.

Obtaining sample input data according to the first format requirement, the number of resources of the sample PDSCH, the RE position of the sample data, and the sample DMRS signal includes:

in response to determining that the number of the resources of the sample PDSCH in the time domain is less than 14 OFDM symbols, making up the number of the resources of the sample PDSCH to 14 OFDM symbols, taking a value of the RE position of the sample data to be 0, taking a value of a position corresponding to a made-up OFDM symbol to be 0, and obtaining the sample input data; and/or
in response to determining that the number of the resources of the sample PDSCH in the frequency domain is a plurality of RBs, splitting the plurality of RBs into a plurality of single RBs, taking a value of the RE position of the sample data of each single RB to be 0, and obtaining the sample input data of the plurality of single RBs; and/or
in response to determining that the number of the resources of the sample PDSCH in the spatial domain is a plurality of layers, splitting the plurality of layers into a plurality of single layers, taking a value of the RE position of the sample data of each single layer to be 0, and obtaining the sample input data of the plurality of single layers.

In embodiments of the present disclosure, the sample input data is obtained according to the first format requirement, the number of resources of the sample PDSCH, the RE position of the sample data, and the sample DMRS signal, and in a case where in the time domain the number of resources of the sample PDSCH is less than 14 OFDM symbols, the number of resources of the sample PDSCH is made up to 14 OFDM symbols, a value of the RE position of the sample data is taken to be 0, a value of a position corresponding to the made-up OFDM symbol is taken to be 0, a value of a position corresponding to the OFDM symbol of the sample DMRS signal is taken to be the sample DMRS signal, and the sample input data is obtained.

In embodiments of the present disclosure, the sample input data is obtained according to the first format requirement, the number of resources of the sample PDSCH, the RE position of the sample data, and the sample DMRS signal, and in the case where the number of resources of the sample PDSCH is a plurality of RBs, the plurality of RBs are split into a plurality of single RBs, a value of the RE position of the sample data of each single RB is taken to be 0, and the sample input data of the plurality of single RBs is obtained.

In embodiments of the present disclosure, the sample input data is obtained according to the first format requirement, the number of resources of the sample PDSCH, the RE position of the sample data, and the sample DMRS signal, and in a case where the number of resources of the sample PDSCH is a plurality of layers, the plurality of layers are split into a plurality of single layers, a value of the RE position of the sample data of each single layer is taken to be 0, and the sample input data of the plurality of single layers is obtained.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

It could be understood that the sample data set may include a plurality of sets of sample input data, and the plurality of sets of sample input data may be obtained according to the first format requirement, the plurality of sets of sample data sent by the network side device, and the sample DMRS signal.

In another possible implementation, the sample data set includes the sample input data, the network side device obtains the sample PDSCH, the sample PDSCH being configured to carry the sample data and the sample DMRS signal; performs the channel estimation on the DMRS time-frequency position, and obtains the sample estimation channel value of the DMRS position; and obtains the sample input data according to the first format requirement, the number of resources of the sample PDSCH, the RE position of the sample data, and the sample estimation channel value of the DMRS position.

It could be understood that the network side device obtains the sample PDSCH, which may be a sample PDSCH sent by the network side device to the terminal device, the sample PDSCH is configured to carry the sample data and the sample DMRS signal, and the network side device may determine the sample DMRS sending signal it sends.

For the sample DMRS signal carried in the sample PDSCH, the terminal device may send the received sample DMRS signal carried in the sample PDSCH to the network side device after receiving the sample PDSCH. Alternatively, the sample DMRS signal may also be obtained based on the implementation.

Based on this, the network side device, in the case of obtaining the sample DMRS signal and the sample DMRS sending signal, may perform the channel estimation on the DMRS time-frequency position according to the sample DMRS signal and the sample DMRS sending signal, and obtain the sample estimation channel value of the DMRS position.

In embodiments of the present disclosure, the sample data set includes the sample input data, and the network side device obtains the sample data set according to the first format requirement, and may obtain the sample input data according to the first format requirement, the number of resources of the sample PDSCH, the RE position of the sample data, and the sample estimation channel value of the DMRS position.

Obtaining the model input data according to the first format requirement, the number of resources of the sample PDSCH, the RE position of the sample data, and the estimation channel value of the sample DMRS position includes:

in response to determining that the number of the resources of the sample PDSCH in the time domain is less than 14 OFDM symbols, making up the number of the resources of the sample PDSCH to 14 OFDM symbols, taking a value of the RE position of the sample data to be 0, taking a value of a position corresponding to a made-up OFDM symbol to be 0, taking a value of a position corresponding to an OFDM symbol of the sample DMRS signal to be the sample estimation channel value of the DMRS position, and obtaining the sample input data; and/or

in response to determining that the number of the resources of the sample PDSCH in the frequency domain is a plurality of RBs, splitting the plurality of RBs into a plurality of single RBs, taking a value of the RE position of the sample data of each single RB to be 0, taking a value of the RE position of the sample DMRS signal of each single RB to be the sample estimation channel value of the DMRS position, and obtaining the sample input data of the plurality of single RBs; and/or

in response to determining that the number of the resources of the sample PDSCH in the spatial domain is a plurality of layers, splitting the plurality of layers into a plurality of single layers, taking a value of the RE position of the sample data of each single layer to be 0, taking a value of the RE position of the sample DMRS signal to be the sample estimation channel value of the DMRS position, and obtaining the sample input data of the plurality of single layers.

In embodiments of the present disclosure, the sample input data is obtained according to the first format requirement, the number of resources of the sample PDSCH, the RE position of the sample data, and the estimation channel value of the sample DMRS position, and in a case where in the time domain the number of resources of the sample PDSCH is less than 14 OFDM symbols, the number of resources of the sample PDSCH is made up to 14 OFDM symbols, a value of the RE position of the sample data is taken to be 0, a value of a position corresponding to the made-up OFDM symbol is taken to be 0, a value of a position corresponding to the OFDM symbol of the sample DMRS signal is taken to be the sample estimation channel value of the DMRS position, and the sample input data is obtained.

In embodiments of the present disclosure, the sample input data is obtained according to the first format requirement, the number of resources of the sample PDSCH, the RE position of the sample data, and the estimation channel value of the sample DMRS position, and in the case where the number of resources of the sample PDSCH in the frequency domain is a plurality of RBs, the plurality of RBs are split into a plurality of single RBs, a value of the RE position of the sample data of each single RB is taken to be 0, a value of the RE position of the sample DMRS signal of each single RB is taken to be the sample estimation channel value of the DMRS position, and the sample input data of the plurality of single RBs is obtained.

In embodiments of the present disclosure, the sample input data is obtained according to the first format requirement, the number of resources of the sample PDSCH, the RE position of the sample data, and the estimation channel value of the sample DMRS position, and in a case where the number of resources of the sample PDSCH in the spatial domain is a plurality of layers, the plurality of layers are split into a plurality of single layers, a value of the RE position of the sample data of each single layer is taken to be 0, a value of the RE position of the sample DMRS signal of each single layer is taken to be the sample estimation channel value of the DMRS position, and the sample input data of the plurality of single layers is obtained.

It could be understood that the sample data set may include a plurality of sets of sample input data, and the plurality of sets of sample input data may be obtained according to the first format requirement, the plurality of sets of sample data sent by the network side device, and the sample DMRS signal.

In some other embodiments, the network side device determining the channel estimation model includes: determining the second format requirement of the output data of the channel estimation model; determining the initial channel estimation model according to the first format requirement and/or the second format requirement; obtaining the sample data set according to the first format requirement and the second format requirement; and training the initial channel estimation model according to the sample data set, and determining the channel estimation model.

In embodiments of the present disclosure, the network side device determines the channel estimation model, which may be determined by training the initial channel estimation model by the network side device.

It could be understood that the initial channel estimation model may be an AI model in the related art, and the network side device may train the initial channel estimation model that is an AI model in the related art to obtain the channel estimation model.

However, in the channel estimation model, the input data has a first format requirement and/or the output data has a second format requirement. In this case, the AI model in the related art may not be used as an initial channel estimation model, and it may also be understood that the channel estimation model cannot be obtained by directly training the initial channel estimation model that is the AI model in the related art.

Based on this, in embodiments of the present disclosure, the initial channel estimation model may be determined according to the first format requirement and/or the second format requirement, in which the structure, parameter, and other related configurations of the AI model in the related art may be improved according to the first format requirement and/or the second format requirement, thereby obtaining the initial channel estimation model.

Afterwards, the network side device determines the initial channel estimation model, and also needs to obtain the sample data set satisfying the first format requirement and the second format requirement, and after obtaining the sample data set, the initial channel estimation model may be trained according to the sample data set to obtain the channel estimation model.

In some embodiments, the sample data set includes sample input data and sample output data, and obtaining the sample data set according to the first format requirement and the second format requirement includes: obtaining the sample input data according to the first format requirement; and obtaining the sample output data according to the second format requirement.

In some embodiments, the sample data set includes sample input data and sample output data, the sample input data is obtained according to the first format requirement and satisfies the first format requirement, and the sample output data is obtained according to the second format requirement and satisfies the second format requirement.

In embodiments of the present disclosure, the initial channel estimation model is trained according to the sample dataset, the channel estimation model is determined, which may be that the sample input data is input to the initial channel estimation model, the training output data is obtained, and a loss is calculated according to the training output data and the sample output data to update the parameter of the initial channel estimation model, and thus the channel estimation model is obtained.

The sample data set may include a plurality of sets of sample input data and sample output data, and the plurality of sets of sample input data and sample output data are used to train the initial channel estimation model in the manner described above, so that, in a case where the calculated loss satisfies a certain condition, it can be determined that the training of the initial channel estimation model is completed and the channel estimation model is obtained.

In some embodiments, the network side device obtaining the sample input data according to the first format requirement includes: obtaining the sample PDSCH, the sample PDSCH being configured to carry the sample data and the sample DMRS signal; obtaining a sample DMRS sending signal corresponding to the sample DMRS signal; performing a channel estimation on a DMRS time-frequency position according to the sample DMRS signal and the sample DMRS sending signal, and obtaining the sample estimation channel value of the DMRS position; and obtaining the sample input data according to the first format requirement, the number of resources of the sample PDSCH, the RE position of the sample data, and the sample DMRS signal; or obtaining the sample input data according to the first format requirement, the number of resources of the sample PDSCH, the RE position of the sample data, and the sample estimation channel value of the DMRS position.

A related description of obtaining the sample input data according to the first format requirement, the number of resources of the sample PDSCH, the RE position of the sample data, and the sample DMRS signal may be found in the related descriptions in the embodiments described above, and will not be repeated herein.

A related description of obtaining the sample input data according to the first format requirement, the number of resources of the sample PDSCH, the RE position of the sample data, and the sample estimation channel value of the DMRS position may be found in the related descriptions in the embodiments described above, and will not be repeated herein.

In some embodiments, the network side device obtaining the sample output data according to the second format requirement includes: obtaining the channel estimation value label through the field measurement manner; and processing the channel estimation value label according to the second format requirement, and obtaining the sample output data.

In embodiments of the present disclosure, the network side device obtains the sample output data according to the second format requirement, which may be that the channel estimation value label is obtained through the field measurement manner, and the channel estimation value label is processed according to the second format requirement to obtain the sample output data, or, that the terminal device obtains the channel estimation value label in advance through the field measurement manner, sends the channel estimation value label to the network side device, the network side device receives the channel estimation value label and processes the channel estimation value label according to the second format requirement to obtain the sample output data.

The second format requirement can be found in the related description in the above embodiments, (the sample input data in the sample data set may be uniformly 14 symbols, or the length of the time domain symbols may be variable, in which case the sample output data (an ideal channel estimation value label) on symbols for which no data transmission is performed can only be obtained through the field measurement manner), and in embodiments of the present disclosure, the channel estimation value label can be obtained through the field measurement manner, and the channel estimation value label may be processed according to the second format requirement to obtain the sample output data.

In some other embodiments, the network side device obtaining the sample output data according to the second format requirement includes: obtaining the estimation channel value, in which the channel estimation value label is a channel result estimated according to the correctly decoded transport block (TB); and processing the channel estimation value label according to the second format requirement to obtain the sample output data.

In embodiments of the present disclosure, the network side device obtains the sample output data according to the second format requirement, which may be that the channel result estimated according to the correctly decoded transport block (TB) is determined as the channel estimation value label; the channel estimation value label is processed according to the second format requirement to obtain the sample output data, or, that the terminal device determines the channel result estimated according to the correctly decoded transport block (TB) as the channel estimation value label channel, sends the channel estimation value label to the network side device, and the network side device process the channel estimation value label according to the second format requirement to obtain the sample output data.

The channel result estimated according to the correctly decoded transport block (TB) can be obtained by LS channel estimation, in which, for the actual reception, if the CRC is correctly calibrated, it can be known, through Y=HX, that H can be obtained by the channel estimation methods such as LS, MMSE, etc., in a case where Y and X are certain, and this value can be taken as an ideal channel estimation value label, and further, the network side device can process the channel estimation value label according to the second format requirement to obtain sample output data.

In embodiments of the present disclosure, the sample data set includes a training subdata set, the training subdata set is configured to train the initial channel estimation model, and in a case where the training subdata set is used to train the initial channel estimation model up to a predetermined number of rounds, it can be determined that the training of the initial channel estimation model is completed, and the channel estimation model is obtained, or, furthermore, the loss can be calculated according to the output data obtained from each training, for example, a throughput rate is obtained according to the output data, the loss is calculated, and in a case where the loss reaches a target value, it can be determined that the training of the initial channel estimation model is completed and the channel estimation model is obtained.

In embodiments of the present disclosure, the sample data set includes a validation subdata set in addition to the training subdata set, the training subdata set is configured to train the initial channel estimation model, and the validation subdata set is configured to validate the training process, e.g., after 50 rounds of training the initial channel estimation model using the training subdata set, and the model reaches convergence on the training subdata set, the initial channel estimation model can be validated using the validation subdata set at the same time as the training. It is determined whether the initial channel estimation model converges on the validation subdata set, if it is determined that a convergence effect is achieved, the training subdata set may be continued to be used for training, if it is determined that the convergence effect is not achieved, then the parameter of the initial channel estimation model can be modified, and the training subdata set can be used again for training, which can timely find the problems during the training process to avoid ineffective training. The initial channel estimation model is trained using the training subdata set and the validation subdata set, and determining whether the initial channel estimation model is well trained can be done in the same way as training of the initial channel estimation model using the training subdata set.

In embodiments of the present disclosure, the sample data set includes a test subdata set in addition to the training subdata set, and the test subdata set may test the channel estimation model obtained by training using the training subdata set, and the initial channel estimation model obtained by training using the training subdata set is determined to be a well-trained channel estimation model only if a test result satisfies a preset requirement, and if the test result does not satisfy the preset requirement, it is determined that the initial channel estimation model obtained by training using the training subdata set does not satisfy the requirement at this time, and further training or re-training is required.

In embodiments of the present disclosure, the sample data set includes a test subdata set in addition to the training subdata set and the validation subdata set, and the test subdata set may test the channel estimation model obtained by training using the training subdata set and the validation subdata set, and the initial channel estimation model obtained by training using the training subdata set and the validation subdata set is determined to be a well-trained channel estimation model only if a test result satisfies a preset requirement, and if the test result does not satisfy the preset requirement, it is determined that the initial channel estimation model obtained by training using the training subdata set and the validation subdata set does not satisfy the requirement at this time, and further training or re-training is required.

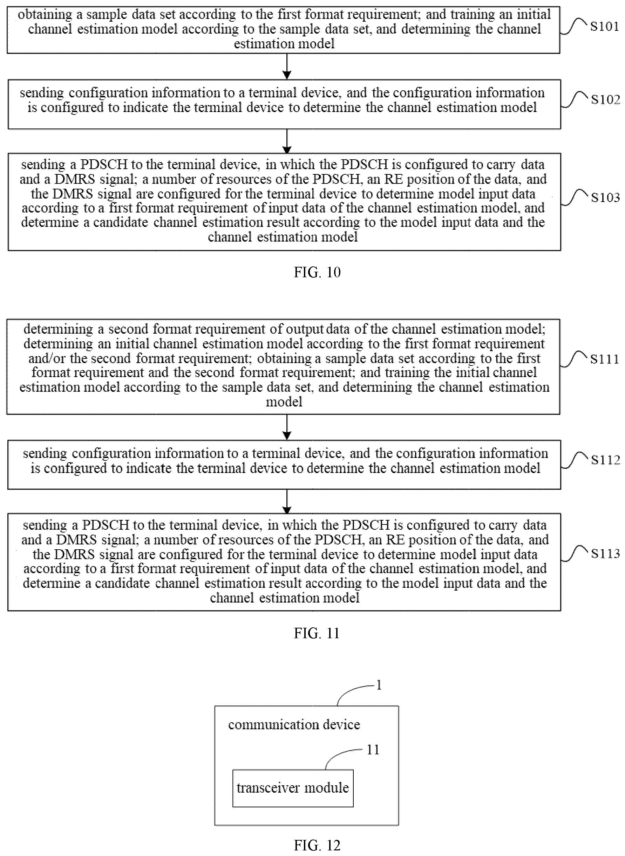

Referring to FIG. 10, FIG. 10 is a flow chart of yet another method for a channel estimation based on artificial intelligence (AI) provided by an embodiment of the present disclosure.

As shown in FIG. 10, the method is performed by a network side device, and the method may include, but is not limited to, the following steps:

In S101: a sample data set is obtained according to a first format requirement; and an initial channel estimation model is trained according to the sample data set, to determine a channel estimation model.

For description of the first format requirement, reference can be made to the related description in the above embodiments and will not be repeated here.

In embodiments of the present disclosure, the network side device determines the channel estimation model, which may be determined by training the initial channel estimation model, in which the network side device first obtains the sample data set satisfying the first format requirement according to the first format requirement of the input data, and trains the initial channel estimation model according to the sample data set and determines the channel estimation model.

The initial channel estimation model is trained according to the sample data set to determine the channel estimation model, which may be trained based on self-supervised learning, and training data in the sample data set satisfying the first format requirement is input to the initial channel estimation model, the initial channel estimation model is trained, and the channel estimation model is then determined.

It should be noted that, in embodiments of the present disclosure, the initial channel estimation model may adopt an AI model in the related art, and the network side device, after obtaining the training data input to the AI model from the sample data set satisfying the first format requirement, performs the training based on the self-supervised learning to determine the channel estimation model.

Of course, in a case where the AI model in the related art is unable to satisfy training according to the training data in the sample data set of the first format requirement, embodiments of the present disclosure may also improve the AI model in the related art according to the first format requirement.

In some embodiments, the network side device determines a second format requirement of output data of the channel estimation model; and determines an initial channel estimation model according to the first format requirement and/or the second format requirement.

In embodiments of the present disclosure, the network side device determines the first format requirement of the input data of the channel estimation model and the second format requirement of the output data of the channel estimation model, determines the initial channel estimation model according to the first format requirement and/or the second format requirement, and may improve the structure, parameter, and other information of the AI model in the related art according to the first format requirement and/or the second format requirement to determine the initial channel estimation model.

Based on this, on the basis of determining the initial channel estimation model, and the sample data set, the determined initial channel estimation model can be trained according to the sample data set to obtain the channel estimation model.

In some embodiments, the second format requirement includes at least one of:

N RBs being in a frequency domain, where N is a positive integer;
M OFDM symbols being in a time domain, where M is a positive integer; and
L layers being in a spatial domain, where L is a positive integer.

In embodiments of the present disclosure, the second format requirement may be that N RBs are in the frequency domain, e.g., 1 RB.

In embodiments of the present disclosure, the second format requirement may be that M OFDM symbols are in the time domain, e.g., 14 orthogonal frequency division multiplexing (OFDM) symbols.

In embodiments of the present disclosure, the second format requirement may be that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the sample data set includes the sample input data, in which obtaining the sample data set according to the first format requirement includes: obtaining a sample PDSCH, the sample PDSCH being configured to carry the sample data and the sample DMRS signal; obtaining a sample DMRS sending signal corresponding to the sample DMRS signal; performing a channel estimation on the DMRS time-frequency position according to the sample DMRS signal and the sample DMRS sending signal, and obtaining a sample estimation channel value of the DMRS position; obtaining sample input data according to the first format requirement, the sample data, and the sample DMRS signal; or obtaining sample input data according to the first format requirement, the sample data, and the sample estimation channel value of the DMRS position.

In S102: configuration information is sent to a terminal device, and the configuration information is configured to indicate the terminal device to determine the channel estimation model.

In S103: a PDSCH is sent to the terminal device, the PDSCH is configured to carry data and a DMRS signal; a number of resources of the PDSCH, an RE position of the data, and the DMRS signal are configured for the terminal device to determine model input data, and a candidate channel estimation result is determined according to the model input data and the channel estimation model.

The related description of S82 to S83 can be found in the related description of the above embodiments and will not be repeated here.

By implementing embodiments of the present disclosure, the network side device obtains the sample data set according to the first format requirement; trains the channel estimation model according to the sample data set and determines the channel estimation model; and sends the PDSCH to the terminal device, the PDSCH being configured to carry the data and the DMRS signal, in which the number of resources of the PDSCH, the RE position of the data, and the DMRS signal are configured for the terminal device to determine the model input data according to the first format requirement of the input data of the channel estimation model, and determine the candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

Referring to FIG. 11, FIG. 11 is a flow chart of yet another method for a channel estimation based on artificial intelligence (AI) provided by an embodiment of the present disclosure.

As shown in FIG. 11, the method is performed by a network side device, and the method may include, but is not limited to, the following steps:
In S111: a second format requirement of output data of the channel estimation model is determined; an initial channel estimation model is determined according to the first format requirement and/or the second format requirement; a sample data set is obtained according to the first format requirement and the second format requirement; and the initial channel estimation model is trained according to the sample data set, and the channel estimation model is determined.

In embodiments of the present disclosure, the network side device determines the channel estimation model, which may be determined by training the initial channel estimation model by the network side device.

It could be understood that the initial channel estimation model may be an AI model in the related art, and the network side device may train the initial channel estimation model that is an AI model in the related art to obtain the channel estimation model.

However, in the channel estimation model, the input data has a first format requirement and/or the output data has a second format requirement. In this case, the AI model in the related art may not be used as an initial channel estimation model, and it may also be understood that the channel estimation model cannot be obtained by directly training the initial channel estimation model that is the AI model in the related art.

Based on this, in embodiments of the present disclosure, the initial channel estimation model may be determined according to the first format requirement and/or the second format requirement, in which the structure, parameter, and other related configurations of the AI model in the related art may be improved according to the first format requirement and/or the second format requirement, thereby obtaining the initial channel estimation model.

Afterwards, the network side device determines the initial channel estimation model, and also needs to obtain the sample data set satisfying the first format requirement and the second format requirement, and after obtaining the sample data set, the initial channel estimation model may be trained according to the sample data set to obtain the channel estimation model.

In some embodiments, the sample data set includes sample input data and sample output data, and obtaining the sample data set according to the first format requirement and the second format requirement includes: obtaining the sample input data according to the first format requirement; and obtaining the sample output data according to the second format requirement.

In some embodiments, the sample data set includes sample input data and sample output data, the sample input data is obtained according to the first format requirement and satisfies the first format requirement, and the sample output data is obtained according to the second format requirement and satisfies the second format requirement.

In embodiments of the present disclosure, the initial channel estimation model is trained according to the sample dataset, the channel estimation model is determined, which may be that the sample input data is input to the initial channel estimation model, the training output data is obtained, and a loss is calculated according to the training output data and the sample output data to update the parameter of the initial channel estimation model, and thus the channel estimation model is obtained.

The sample data set may include a plurality of sets of sample input data and sample output data, and the plurality of sets of sample input data and sample output data are used to train the initial channel estimation model in the manner described above, so that, in a case where the calculated loss satisfies a certain condition, it can be determined that the training of the initial channel estimation model is completed and the channel estimation model is obtained.

In some embodiments, the second format requirement includes at least one of:

N RBs being in a frequency domain, where N is a positive integer;
M OFDM symbols being in a time domain, where M is a positive integer; and
L layers being in a spatial domain, where L is a positive integer.

In embodiments of the present disclosure, the second format requirement may be that N RBs are in the frequency domain, e.g., 1 RB.

In embodiments of the present disclosure, the second format requirement may be that M OFDM symbols are in the time domain, e.g., 14 orthogonal frequency division multiplexing (OFDM) symbols.

In embodiments of the present disclosure, the second format requirement may be that L layers are in the spatial domain, e.g., 1 layer.

It should be noted that the above embodiments are not exhaustive, but are only illustrative of some of the embodiments, and the above embodiments may be implemented individually or in combination, and the above embodiments are only illustrative and are not intended to be specific limitations on the scope of protection of the embodiments of the present disclosure.

In some embodiments, the network side device obtaining the sample input data according to the first format requirement includes: obtaining a sample DMRS signal; obtaining the sample PDSCH, the sample PDSCH being configured to carry the sample data and the sample DMRS signal; obtaining a sample DMRS sending signal corresponding to the sample DMRS signal; performing a channel estimation on a DMRS time-frequency position according to the sample DMRS signal and the sample DMRS sending signal, and obtaining the sample estimation channel value of the DMRS position; and obtaining the sample input data according to the first format requirement, the sample data, and the sample DMRS signal; or obtaining the sample input data according to the first format requirement, the sample data, and the sample estimation channel value of the DMRS position.

A related description of obtaining the sample input data according to the first format requirement, the number of resources of the sample PDSCH, the RE position of the sample data, and the sample DMRS signal may be found in the related descriptions in the embodiments described above, and will not be repeated herein.

A related description of obtaining the sample input data according to the first format requirement, the number of resources of the sample PDSCH, the RE position of the sample data, and the sample estimation channel value of the DMRS position may be found in the related descriptions in the embodiments described above, and will not be repeated herein.

In some embodiments, the network side device obtaining the sample output data according to the second format requirement includes: obtaining the channel estimation value label through the field measurement manner; and processing the channel estimation value label according to the second format requirement, and obtaining the sample output data.

In embodiments of the present disclosure, the network side device obtains the sample output data according to the second format requirement, which may be that the channel estimation value label is obtained through the field measurement manner, and the channel estimation value label is processed according to the second format requirement to obtain the sample output data, or, that the terminal device obtains the channel estimation value label in advance through the field measurement manner, sends the channel estimation value label to the network side device, the network side device receives the channel estimation value label and processes the channel estimation value label according to the second format requirement to obtain the sample output data.

The second format requirement can be found in the related description in the above embodiments, (the sample input data in the sample data set may be uniformly 14 symbols, or the length of the time domain symbols may be variable, in which case the sample output data (an ideal channel estimation value label) on symbols for which no data transmission is performed can only be obtained through the field measurement manner), and in embodiments of the present disclosure, the channel estimation value label can be obtained through the field measurement manner, and the channel estimation value label may be processed according to the second format requirement to obtain the sample output data.

In some other embodiments, the network side device obtaining the sample output data according to the second format requirement includes: obtaining the estimation channel value, in which the channel estimation value label is a channel result estimated according to the correctly decoded transport block (TB); and processing the channel estimation value label according to the second format requirement to obtain the sample output data.

In embodiments of the present disclosure, the network side device obtains the sample output data according to the second format requirement, which may be that the channel result estimated according to the correctly decoded transport block (TB) is determined as the channel estimation value label; the channel estimation value label is processed according to the second format requirement to obtain the sample output data, or, that the terminal device determines the channel result estimated according to the correctly decoded transport block (TB) as the channel estimation value label channel, sends the channel estimation value label to the network side device, and the network side device process the channel estimation value label according to the second format requirement to obtain the sample output data.

The channel result estimated according to the correctly decoded transport block (TB) can be obtained by LS channel estimation, in which, for the actual reception, if the CRC is correctly calibrated, it can be known, through Y=HX, that H can be obtained by the channel estimation methods such as LS, MMSE, etc., in a case where Y and X are certain, and this value can be taken as an ideal channel estimation value label, and further, the network side device can process the channel estimation value label according to the second format requirement to obtain sample output data.

In S112: configuration information is sent to a terminal device, and the configuration information is configured to indicate the terminal device to determine the channel estimation model.

In S113: a PDSCH is sent to the terminal device, the PDSCH is configured to carry data and a DMRS signal; a number of resources of the PDSCH, an RE position of the data, and the DMRS signal are configured for the terminal device to determine model input data, and a candidate channel estimation result is determined according to the model input data and the channel estimation model.

The related description of S112 to S113 can be found in the related description of the above embodiments and will not be repeated here.

By implementing embodiments of the present disclosure, the network side device determines the second format requirement of output data of the channel estimation model; determines the initial channel estimation model according to the first format requirement and/or the second format requirement; obtains the sample data set according to the first format requirement and the second format requirement; trains the initial channel estimation model according to the sample data set and determines the channel estimation model; and sends the PDSCH to the terminal device, the PDSCH being configured to carry the data and the DMRS signal, in which the number of resources of the PDSCH, the RE position of the data, and the DMRS signal are configured for the terminal device to determine the model input data according to the first format requirement of the input data of the channel estimation model, and to determine the candidate channel estimation result according to the model input data and the channel estimation model. Thus, the terminal device can use a unified channel estimation model for channel estimation under different DMRS configurations without maintaining a plurality of channel estimation models, which can reduce complexity and overhead.

In the above-described embodiments provided in the present disclosure, the method provided in the embodiments of the present disclosure are described from the perspectives of a terminal device and a network side device, respectively. In order to realize each of the functions in the method provided in the above embodiments of the present disclosure, the terminal device and the network side device may include a hardware structure, a software module, and realize each of the above functions in the form of a hardware structure, a software module, or a hardware structure plus a software module. One of the above functions can be performed as a hardware structure, a software module, or a hardware structure plus a software module.

Referring to FIG. 12, which is a structural schematic diagram of a communication device 1 provided by an embodiment of the present disclosure. The communication device 1 shown in FIG. 12 may include a transceiver module 11 and a processing module. The transceiver module may include a transmitter module and/or a receiver module, the transmitter module is configured to realize a transmitting function and the receiver module is configured to realize a receiving function, and the transceiver module may realize the transmitting function and/or the receiving function.

The communication device 1 may be the terminal device, a device in the terminal device, or a device capable of being used in conjunction with the terminal device. Alternatively, the communication device 1 may be the network side device, a device in the network side device, or a device capable of being used in conjunction with the network side device.

The communication device 1 is the terminal device:

The device includes a transceiver module 11 and a processing module 12.

The processing module 12 is configured to determine a channel estimation model and a first format requirement of input data of the channel estimation model.

The transceiver module 11 is configured to receive a PDSCH sent by a network side device, and the PDSCH is configured to carry data and a DMRS signal.

The processing module 12 is further configured to determine model input data according to the first format requirement, a number of resources of the PDSCH, an RE position of the data and the DMRS signal.

The processing module 12 is further configured to determine a candidate channel estimation result according to the model input data and the channel estimation model.

In some embodiments, the processing module 12 is further configured to determine a channel estimation result according to the RE position of the data and the candidate channel estimation result.

In some embodiments, the transceiver module 11 is further configured to receive configuration information sent by the network side device; and the processing module 12 is further configured to determine the channel estimation model according to the configuration information.

In some embodiments, the processing module 12 is further configured to obtain a sample data set according to the first format requirement; and train an initial channel estimation model according to the sample data set, and determine the channel estimation model.

In some embodiments, the processing module 12 is further configured to determine a second of output data of the channel estimation model; and determine the initial channel estimation model according to the first format requirement and/or the second format requirement.

In some embodiments, the processing module 12 is further configured to determine a second of output data of the channel estimation model; determine the initial channel estimation model according to the first format requirement and/or the second format requirement; obtain a sample data set according to the first format requirement and the second format requirement; and train the initial channel estimation model according to the sample data set, and determine the channel estimation model.

In some embodiments, the sample data set includes sample input data and sample output data, and the processing module 12 is further configured to obtain the sample input data according to the first format requirement; and obtain the sample output data according to the second format requirement.

In some embodiments, the transceiver module 11 is further configured to obtain a sample PDSCH, the sample PDSCH being configured to carry sample data and a sample DMRS signal; the processing module 12 is further configured to perform a channel estimation on the DMRS time-frequency position based on the sample DMRS signal and a sample DMRS sending signal, and obtain a sample estimation channel value of the DMRS position; and obtain a sample input data according to the first format requirement, the number of resources of the sample PDSCH, the RE position of the sample data, and the sample DMRS signal; or obtain a sample input data according to the first format requirement, the number of resources of the sample PDSCH, the RE position of the sample data, and the sample estimation channel value of the DMRS position.

In some embodiments, the processing module 12 is further configured to obtain a channel estimation value label through a field measurement manner; and process the channel estimation value label according to the second format requirement, and obtain the sample output data.

In some embodiments, the processing module 12 is further configured to determine a channel result estimated according to a correctly decoded transport block (TB) as the channel estimation value label; and process the channel estimation value label according to the second format requirement, and obtain the sample output data.

In some embodiments, the first format requirement includes at least one of:

N RBs being in a frequency domain, where N is a positive integer;
M OFDM symbols being in a time domain, where M is a positive integer; and
L layers being in a spatial domain, where L is a positive integer.
In some embodiments, the second format requirement includes at least one of:
N RBs being in a frequency domain, where N is a positive integer;
M OFDM symbols being in a time domain, where M is a positive integer; and

L layers being in a spatial domain, where L is a positive integer.

In some embodiments, the processing module 12 is further configured to, in response to determining that the number of the resources of the PDSCH in the time domain is less than 14 OFDM symbols, make up the number of the resources of the PDSCH to 14 OFDM symbols, take a value of the RE position of the data to be 0, take a value of a position corresponding to a made-up OFDM symbol to be 0, and obtain the sample input data; and/or

in response to determining that the number of the resources of the PDSCH in the frequency domain is a plurality of RBs, split the plurality of RBs into a plurality of single RBs, take a value of the RE position of the data of each single RB to be 0, and obtain the model input data of the plurality of single RBs; and/or
in response to determining that the number of the resources of the PDSCH in the spatial domain is a plurality of layers, split the plurality of layers into a plurality of single layers, take a value of the RE position of the data of each single layer to be 0, and obtain the model input data of the plurality of single layers.

In some embodiments, the processing module 12 is further configured to perform the channel estimation on the DMRS time-frequency position based on the DMRS signal and the DMRS sending signal, obtain the estimation channel value of the DMRS position; and obtain the model input data according to the first format requirement, the number of resources of the PDSCH, the RE position of the data, and the estimation channel value of the DMRS position.

In some embodiments, the processing module 12 is further configured to, in response to determining that the number of the resources of the PDSCH in the time domain is less than 14 OFDM symbols, make up the number of the resources of the PDSCH to 14 OFDM symbols, take a value of the RE position of the data to be 0, take a value of a position corresponding to a made-up OFDM symbol to be 0, take a value of a position corresponding to the OFDM symbol of the DMRS signal to be the estimation channel value of the DMRS position, and obtain the model input data; and/or

in response to determining that the number of the resources of the PDSCH in the frequency domain is a plurality of RBs, split the plurality of RBs into a plurality of single RBs, take a value of the RE position of the data of each single RB to be 0, take a value of the RE position of the DMRS signal of each single RB to be the estimation channel value of the DMRS position, and obtain the model input data of the plurality of single RBs; and/or
in response to determining that the number of the resources of the PDSCH in the spatial domain is a plurality of layers, split the plurality of layers into a plurality of single layers, take a value of the RE position of the data of each single layer to be 0, take a value of the RE position of the DMRS signal to be the estimation channel value of the DMRS position, and obtain the model input data of the plurality of single layers.

In some embodiments, the processing module 12 is further configured to input the model input data of the plurality of single RBs to the channel estimation model sequentially in a unit of single RB, to determine a candidate channel estimation result; or

input the model input data of the plurality of single RBs into a plurality of channel estimation models respectively in a unit of single RB for parallel inference, to determine a candidate channel estimation result; or
input the model input data of the plurality of single layers to the channel estimation model sequentially in a unit of single layer, to determine a candidate channel estimation result; or
input the model input data of the plurality of single layers to a plurality of channel estimation models respectively in a unit of single layer for parallel inference, to determine a candidate channel estimation result.

The communication device 1 is a network side device;
The device includes a transceiver module 11 and a processing module 12.
The processing module 12 is configured to determine a channel estimation model.
The transceiver module 11 is configured to send configuration information to a terminal device, in which the configuration information is configured to indicate the terminal device to determine the channel estimation model.
The transceiver module 11 is further configured to send a PDSCH to the terminal device, the PDSCH is configured to carry data and a DMRS signal; the number of resources of the PDSCH, the RE position of the data, and the DMRS signal are configured for the terminal device to determine the model input data according to the first format requirement of the input data of the channel estimation model, and determine the candidate channel estimation result according to the model input data and the channel estimation model.
In some embodiments, the processing module 12 is further configured to obtain a sample data set according to the first format requirement; train an initial channel estimation model according to the sample data set, and determine the channel estimation model.
In some embodiments, the processing module 12 is further configured to determine a second of output data of the channel estimation model; and determine the initial channel estimation model according to the first format requirement and/or the second format requirement.

In some embodiments, the sample data set includes the sample input data, in which the processing module 12 is further configured to obtain a sample PDSCH, the sample PDSCH being configured to carry the sample data and the sample DMRS signal; obtain a sample DMRS sending signal corresponding to the sample DMRS signal; perform the channel estimation on the DMRS time-frequency position based on the sample DMRS signal and the sample DMRS sending signal, and obtain the sample estimation channel value of the DMRS position; and obtain the sample input data according to the first format requirement, the number of resources of the sample PDSCH, the RE position of the sample data, and the sample DMRS signal; or obtain the sample input data according to the first format requirement, the number of resources of the sample PDSCH, the RE position of the sample data, and the sample estimation channel value of the DMRS position.

In some embodiments, the processing module 12 is further configured to determine a second format requirement of output data of the channel estimation model; determine an initial channel estimation model according to the first format requirement and/or the second format requirement; obtain a sample data set according to the first format requirement and the second format requirement; and train the initial channel estimation model according to the sample data set and determine the channel estimation model.

In some embodiments, the sample data set includes sample input data and sample output data, and the processing module 12 is further configured to obtain the sample input data according to the first format requirement; and obtain the sample output data according to the second format requirement.

In some embodiments, the processing module 12 is further configured to obtain a sample PDSCH, the sample PDSCH being configured to carry the sample data and the sample DMRS signal; obtain the sample DMRS sending signal corresponding to the sample DMRS signal; perform the channel estimation on the DMRS time-frequency position based on the sample DMRS signal and the sample DMRS sending signal, and obtain the sample estimation channel value of the DMRS position; obtain the sample input data according to the first format requirement, the number of resources of the sample PDSCH, the RE position of the sample data, and the sample DMRS signal; or obtain the sample input data according to the first format requirement, the number of resources of the sample PDSCH, the RE position of the sample data, and the sample estimation channel value of the DMRS position.

In some embodiments, the processing module 12 is further configured to obtain the channel estimation value label through a field measurement manner; process the channel estimation value label according to the second format requirement, and obtain the sample output data.

In some embodiments, the processing module 12 is further configured to obtain the channel estimation value label, in which the channel estimation value label is a channel result estimated according to the correctly decoded transport block (TB); and process the channel estimation value label according to the second format requirement, and obtain the sample output data.

In some embodiments, the first format requirement includes at least one of:

N RBs being in a frequency domain, where N is a positive integer;
M OFDM symbols being in a time domain, where M is a positive integer; and
L layers being in a spatial domain, where L is a positive integer.

In some embodiments, the second format requirement includes at least one of:

N RBs being in a frequency domain, where N is a positive integer;
M OFDM symbols being in a time domain, where M is a positive integer; and
L layers being in a spatial domain, where L is a positive integer.

With regard to the communication device 1 in the above embodiments, the specific manner in which each module performs an operation has been described in detail in the embodiments relating to the method, and will not be described in detail here.

The communication device 1 provided in the above embodiments of the present disclosure achieves the same or similar beneficial effects as the method for the channel estimation on artificial intelligence (AI) provided in some of the above embodiments, which will not be repeated herein.

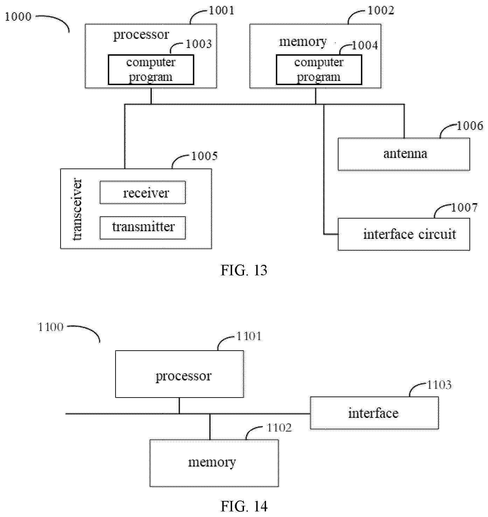

Referring to FIG. 13, FIG. 13 is a structural schematic diagram of another communication device 1000 provided by an embodiment of the present disclosure. The communication device 1000 may be the network side device or the terminal device, or a chip, chip system, or processor, etc. that supports the network side device to realize the above described method, or a chip, chip system, or processor, etc. that supports the terminal device to realize the above described method. The communication device 1000 may be used to implement the method described in the above method embodiments, and details of which may be found in the description of the above method embodiments.

The communication device 1000 may include one or more processors 1001. The processor 1001 can be a general purpose processor or a specialized processor, etc. This may be, for example, a baseband processor or a central processor. The baseband processor can be used to process communication protocols as well as communication data, and the central processor can be used to control communication device (e.g., a network side device, a baseband chip, a terminal device, a terminal device chip, a DU, or a CU, etc.), execute a computer program, and process the data of the computer program.

Optionally, the communication device 1000 includes one or more memories 1002, on which a computer program 1004 may be stored, and the memory 1002 executes the computer program 1004 to cause the communication device 1000 to perform the method described in the method embodiments above. Optionally, data may also be stored in the memory 1002. The communication device 1000 and the memory 1002 may be provided separately or may be integrated together.

Optionally, the communication device 1000 may also include a transceiver 1005, and an antenna 1006. The transceiver 1005 may be referred to as a transceiver unit, a transceiving machine, or a transceiver circuit, etc., and is used to implement the transceiving function. The transceiver 1005 may include a receiver and a transmitter, the receiver may be referred to as a receiving machine or a receiving circuit, etc., for implementing the receiving function, and the transmitter may be referred to as a transmitting machine or a transmitting circuit, etc., for implementing the transmitting function.

Optionally, the communication device 1000 may also include one or more interface circuits 1007. The interface circuit 1007 is used to receive code instructions and transmit them to the processor 1001. The processor 1001 runs the code instructions to cause the communication device 1000 to perform the method described in the above method embodiments.

The communication device 1000 is a terminal device: the processor 1001 is used to perform S21, S23 and S24 in FIG. 2; S33 and S34 in FIG. 3; S41, S43 and S44 in FIG. 4; S51, S53 and S54 in FIG. 5; and S61, S63 and S64 in FIG. 6; the transceiver 1005 is used to perform S22 in FIG. 2; S31 and S32 in FIG. 3; S42 in FIG. 4; S52 in FIG. 5; and S62 in FIG. 6.

The communication device 1000 is the network side device: the processor 1001 is used to perform S71 in FIG. 7; S81 in FIG. 8; and S91 in FIG. 9; and the transceiver 1005 is used to perform S72 and S73 in FIG. 7; S82 and S83 in FIG. 8; and S92 and S93 in FIG. 9.

In an implementation, the processor 1001 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for reading and writing of code/data or, the above transceiver circuit, interface or interface circuit may be used for transmission or delivery of the signal.

In an implementation, the processor 1001 may hold a computer program 1003, and the computer program 1003 running on the processor 1001 may cause the communication device 1000 to perform the method described in the method embodiments above. The computer program 1003 may be solidified in the processor 1001, in which case the processor 1001 may be implemented by hardware.

In an implementation, the communication device 1000 may include a circuit, the circuit may realize the function of transmitting or receiving or communication in the preceding method embodiments. The processors and transceivers described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, and the like. The processors and transceivers can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs), and so on.

The communication device in the above description of embodiments may be a terminal device, but the scope of the communication device described in the present disclosure is not limited thereto, and the structure of the communication device may not be limited by FIG. 13. The communication device may be a stand-alone device or may be part of a larger device. The communication device may be, for example:

(1) A stand-alone integrated circuit IC, or chip, or, chip system, or subsystem;
(2) A collection of ICs having one or more ICs, optionally, the collection of ICs may also include storage components for storing data, computer programs;
(3) ASIC, such as a modem;
(4) A module that can be embedded in other device;
(5) Receiving machines, terminal devices, intelligent terminal devices, cellular phones, wireless devices, handhelds, mobile units, in-vehicle devices, network devices, cloud devices, artificial intelligence devices, and so on;
(6) Others, etc.

For the case where the communication device may be a chip or a chip system, see FIG. 14 for a structural diagram of a chip provided by an embodiment of the present disclosure.

The chip 1100 includes a processor 1101 and an interface 1103. The number of processors 1101 may be one or more, and the number of interfaces 1103 may be more than one.

For the case where the chip is used to implement the functions of the network side device in the embodiments of the present disclosure:

The interface 1103 is configured to receive code instructions and transmit them to the processor.

The processor 1101 is configured to run code instructions to perform the method for channel estimation based on an artificial intelligence (AI) as described in some embodiments above.

For the case where the chip is used to realize the functions of the terminal device in the embodiments of the present disclosure:

The interface 1103 is configured to receive code instructions and transmit them to the processor.

The processor 1101 is configured to run code instructions to perform the method for channel estimation based on an artificial intelligence (AI) as described in some embodiments above.

Optionally, the chip 1100 further includes a memory 1102, and the memory 1102 is used to store necessary computer programs and data.

A person skilled in the art may also appreciate that the various illustrative logical blocks and steps set forth in the embodiments of the present disclosure may be implemented by electronic hardware, computer software, or a combination of both. Whether such a function is realized in hardware or software depends on the specific application and the design requirements of the overall system. A person skilled in the art may for each particular application, various methods may be used to implement the described functionality, but such implementations should not be construed as being outside the scope of protection of the embodiments of the present disclosure.

Embodiments of the present disclosure also provide a system for the channel estimation based on artificial intelligence (AI) that includes a communication device as a terminal device and a communication device as a network side device in the aforementioned embodiment of FIG. 12, or, the system includes a communication device as a terminal device and a communication device as a network side device in the aforementioned embodiment of FIG. 13.

The present disclosure also provides a readable storage medium having stored thereon instructions which, when executed by a computer, realize the functions of any of the method embodiments described above.

The present disclosure also provides a computer program product that, when executed by a computer, implements the functions of any of the method embodiments described above.

In the above embodiments, this may be implemented in whole or in part by software, hardware, firmware, or any combination thereof. When implemented using software, it may be implemented in whole or in part as a computer program product. The computer program product described includes one or more computer programs. Loading and executing the computer program on a computer produces, in whole or in part, a process or function in accordance with the processes described in embodiments of the present disclosure. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website, computer, server or data center to another website, computer, server or data center by wired (e.g., coaxial cable, fiber optics, digital subscriber line (DSL), etc.) or wireless (e.g., infrared, wireless, microwave, etc.) means. The computer-readable storage medium may be any available medium to which a computer has access or a data storage device such as a server, data center, etc. that contains one or more available media integrated. The available media described may be magnetic media (e.g., floppy disk, hard disk, tape), optical media (e.g., high-density digital video disc (DVD)), or semiconductor media (e.g., solid state disk (SSD)) and the like.

A person of ordinary skill in the art may understand that the first, second, and other various numerical numbers involved in the present disclosure are only described for the convenience of differentiation, and are not used to limit the scope of the embodiments of the present disclosure, and also indicate the order of precedence.

The at least one of the present disclosure may also be described as one or more, and the plurality may be two, three, four, or more, without limitation of the present disclosure. In embodiments of the present disclosure, for a type of technical feature, a technical feature of the type of technical feature is distinguished by "first", "second", "third", "A ", "B", "C", and "D", etc., and the technical features described by the "first", "second", "third", "A", "B", "C", and "D" are in no order of priority or size.

The correspondences shown in the tables in this disclosure may be configured or may be predefined. The values of the information in the tables are merely examples and may be configured to be other values, which are not limited by this disclosure. When configuring the correspondence between the information and each parameter, it is not necessary to configure all the correspondences illustrated in each table. For example, certain rows of the table in the present disclosure illustrate correspondences that may also not be configured. As another example, appropriate distortion adjustments can be made based on the above table, e.g., splitting, merging, etc. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chained table, tree, graph, structure, class, heap, hash table, or hash table may be used.

Predefined in the present disclosure may be understood as defined, pre-defined, stored, pre-stored, pre-negotiated, pre-configured, solidified, or pre-fired.

A person of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. The skilled professional may use different methods for each particular application to implement the described function, but such implementations should not be considered outside the scope of the present disclosure.

It is clearly understood by those skilled in the field to which it belongs that, for the convenience and brevity of the description, the specific working processes of the above-described systems, apparatuses, and units can be referred to the corresponding processes in the foregoing method embodiments, and will not be repeated herein.

The above-described are merely specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

**Claims**

1. A method for a channel estimation based on artificial intelligence (AI), performed by a terminal device, comprising:

   determining a channel estimation model and a first format requirement of input data of the channel estimation model;
   receiving a physical downlink shared channel (PDSCH) sent by a network side device, wherein the PDSCH is configured to carry data and a DMRS signal;
   determining model input data according to the first format requirement, a number of resources of the PDSCH, a resource element (RE) position of the data, and the DMRS signal; and
   determining a candidate channel estimation result according to the model input data and the channel estimation model.

2. The method according to claim 1, further comprising:
   determining a channel estimation result according to the RE position of the data and the candidate channel estimation result.

3. The method according to claim 1 or 2, wherein determining the channel estimation model comprises:

   receiving configuration information sent by the network side device; and
   determining the channel estimation model according to the configuration information.

4. The method according to claim 1 or 2, wherein determining the channel estimation model comprises:

   obtaining a sample data set according to the first format requirement, wherein the sample data set comprises sample input data; and
   training an initial channel estimation model according to the sample data set, and determining the channel estimation model.

5. The method according to claim 4, further comprising:

   determining a second format requirement of output data of the channel estimation model; and
   determining the initial channel estimation model according to the first format requirement and/or the second format requirement.

6. The method according to claim 1 or 2, wherein determining the channel estimation model comprises:

   determining a second format requirement of output data of the channel estimation model; and
   determining an initial channel estimation model according to the first format requirement and/or the second format requirement;

obtaining a sample data set according to the first format requirement and the second format requirement; and training the initial channel estimation model according to the sample data set, and determining the channel estimation model.

7. The method according to claim 6, wherein the sample data set comprises sample input data and sample output data, and obtaining the sample data set according to the first format requirement and the second format requirement comprises:

obtaining the sample input data according to the first format requirement; and
obtaining the sample output data according to the second format requirement.

8. The method according to claim 4, 5, or 7, wherein obtaining the sample input data according to the first format requirement comprises:

obtaining a sample PDSCH, wherein the sample PDSCH is configured to carry sample data and a sample DMRS signal;
performing a channel estimation on a DMRS time-frequency position based on the sample DMRS signal and a sample DMRS sending signal, and obtaining a sample estimation channel value of a DMRS position; and
obtaining the sample input data according to the first format requirement, a number of resources of the sample PDSCH, an RE position of the sample data, and the sample DMRS signal; or obtaining the sample input data according to the first format requirement, a number of resources of the sample PDSCH, an RE position of the sample data, and the sample estimation channel value of the DMRS position.

9. The method according to claim 7, wherein obtaining the sample output data according to the second format requirement comprises:

obtaining a channel estimation value label through a field measurement manner; and
processing the channel estimation value label according to the second format requirement, and obtaining the sample output data.

10. The method according to claim 7, wherein obtaining the sample output data according to the second format requirement comprises:

determining a channel result estimated according to a correctly decoded transport block (TB) as the channel estimation value label; and
processing the channel estimation value label according to the second format requirement, and obtaining the sample output data.

11. The method according to any one of claims 1 to 10, wherein the first format requirement comprises at least one of:

N resource blocks (RBs) being in a frequency domain, where N is a positive integer;
M orthogonal frequency division multiplexing (OFDM) symbols being in a time domain, where M is a positive integer; and
L layers being in a spatial domain, where L is a positive integer.

12. The method according to any one of claims 5 to 10, wherein the second format requirement comprises at least one of:

N RBs being in a frequency domain, where N is a positive integer;
M OFDM symbols being in a time domain, where M is a positive integer; and
L layers being in a spatial domain, where L is a positive integer.

13. The method according to claim 11, wherein obtaining the model input data according to the first format requirement, the number of resources of the PDSCH, the RE position of the data, and the DMRS signal comprises:

in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, and obtaining the model input data; and/or

in response to determining that the number of the resources of the PDSCH in the frequency domain is a plurality of RBs, splitting the plurality of RBs into a plurality of single RBs, taking a value of the RE position of the data of each single RB to be 0, and obtaining the model input data of the plurality of single RBs; and/or

in response to determining that the number of the resources of the PDSCH in the spatial domain is a plurality of layers, splitting the plurality of layers into a plurality of single layers, taking a value of the RE position of the data of each single layer to be 0, and obtaining the model input data of the plurality of single layers.

14. The method according to claim 11, wherein determining the model input data according to the first format requirement, the number of resources of the PDSCH, the RE position of the data, and the DMRS signal comprises:

performing a channel estimation on a DMRS time-frequency position based on the DMRS signal and a DMRS sending signal, and obtaining an estimation channel value of a DMRS position; and

obtaining the model input data according to the first format requirement, the number of resources of the PDSCH, the RE position of the data, and the estimation channel value of the DMRS position.

15. The method according to claim 14, wherein obtaining the model input data according to the first format requirement, the number of the resources of the PDSCH, the RE position of the data, and the estimation channel value of the DMRS position comprises:

in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, taking a value of a position corresponding to an OFDM symbol of the DMRS signal to be the estimation channel value of the DMRS position, and obtaining the model input data; and/or

in response to determining that the number of the resources of the PDSCH in the frequency domain is a plurality of RBs, splitting the plurality of RBs into a plurality of single RBs, taking a value of the RE position of the data of each single RB to be 0, taking a value of the RE position of the DMRS signal of each single RB to be the estimation channel value of the DMRS position, and obtaining the model input data of the plurality of single RBs; and/or

in response to determining that the number of the resources of the PDSCH in the spatial domain is a plurality of layers, splitting the plurality of layers into a plurality of single layers, taking a value of the RE position of the data of each single layer to be 0, taking a value of the RE position of the DMRS signal to be the estimation channel value of the DMRS position, and obtaining the model input data of the plurality of single layers.

16. The method according to claim 13 or 15, wherein determining the candidate channel estimation result according to the model input data and the channel estimation model comprises:

inputting the model input data of the plurality of single RBs into the channel estimation model sequentially in a unit of single RB, and determining the candidate channel estimation result; or

inputting the model input data of the plurality of single RBs into a plurality of channel estimation models respectively in a unit of single RB for parallel inference, and determining the candidate channel estimation result; or

inputting the model input data of the plurality of single layers into the channel estimation model sequentially in a unit of single layer, and determining the candidate channel estimation result; or

inputting the model input data of the plurality of single layers into a plurality of channel estimation models respectively in a unit of single layer for parallel inference, and determining the candidate channel estimation result.

17. A method for a channel estimation based on artificial intelligence (AI), performed by a network side device, comprising:

determining a channel estimation model;

sending configuration information to a terminal device, wherein the configuration information is configured to indicate the terminal device to determine the channel estimation model; and

sending a PDSCH to the terminal device, wherein the PDSCH is configured to carry data and a DMRS signal; a number of resources of the PDSCH, an RE position of the data, and the DMRS signal are configured for the terminal device to determine model input data according to a first format requirement of input data of the channel estimation model, and determine a candidate channel estimation result according to the model input data and the channel estimation model.

18. The method according to claim 17, wherein determining the channel estimation model comprises:

   obtaining a sample data set according to the first format requirement, wherein the sample data set comprises sample input data; and
   training an initial channel estimation model according to the sample data set, and determining the channel estimation model.

19. The method according to claim 18, further comprising:

   determining a second format requirement of output data of the channel estimation model; and
   determining the initial channel estimation model according to the first format requirement and/or the second format requirement.

20. The method according to claim 17, wherein determining the channel estimation model comprises:

   determining a second format requirement of output data of the channel estimation model; and
   determining an initial channel estimation model according to the first format requirement and/or the second format requirement;
   obtaining a sample data set according to the first format requirement and the second format requirement; and
   training the initial channel estimation model according to the sample data set, and determining the channel estimation model.

21. The method according to claim 20, wherein the sample data set comprises sample input data and sample output data, and obtaining the sample data set according to the first format requirement and the second format requirement comprises:

   obtaining the sample input data according to the first format requirement; and
   obtaining the sample output data according to the second format requirement.

22. The method according to claim 18, 19, or 21, wherein obtaining the sample input data according to the first format requirement comprises:

   obtaining a sample PDSCH, wherein the sample PDSCH is configured to carry sample data and a sample DMRS signal;
   obtaining a sample DMRS sending signal corresponding to the sample DMRS signal;
   performing a channel estimation on a DMRS time-frequency position based on the sample DMRS signal and the sample DMRS sending signal, and obtaining a sample estimation channel value of a DMRS position; and
   obtaining the sample input data according to the first format requirement, the number of resources of the PDSCH, an RE position of the sample data, and the sample DMRS signal; or obtaining the sample input data according to the first format requirement, the number of resources of the PDSCH, an RE position of the sample data and the sample estimation channel value of the DMRS position.

23. The method according to claim 21, wherein obtaining the sample output data according to the second format requirement comprises:

   obtaining a channel estimation value label through a field measurement manner; and
   processing the channel estimation value label according to the second format requirement, and obtaining the sample output data.

24. The method according to claim 21, wherein obtaining the sample output data according to the second format requirement comprises:

   obtaining a channel estimation value label, wherein the channel estimation value label is a channel result estimated according to a correctly decoded transport block (TB); and
   processing the channel estimation value label according to the second format requirement, and obtaining the sample output data.

25. The method according to any one of claims 17 to 24, wherein the first format requirement comprises at least one of:

N resource blocks (RBs) being in a frequency domain, where N is a positive integer;
M orthogonal frequency division multiplexing (OFDM) symbols being in a time domain, where M is a positive integer; and
L layers being in a spatial domain, where L is a positive integer.

26. The method according to any one of claims 19 to 25, wherein the second format requirement comprises at least one of:

N RBs being in a frequency domain, where N is a positive integer;
M OFDM symbols being in a time domain, where M is a positive integer; and
L layers being in a spatial domain, where L is a positive integer.

27. A communication device, comprising:

a processing module configured to determine a channel estimation model and a first format requirement of input data of the channel estimation model; and
a transceiver module configured to receive a physical downlink shared channel (PDSCH) sent by a network side device, wherein the PDSCH is configured to carry data and a DMRS signal,
wherein the processing module is further configured to determine model input data according to the first format requirement, a number of resources of the PDSCH, an RE position of the data, and the DMRS signal; and
the processing module is further configured to determine a candidate channel estimation result according to the model input data and the channel estimation model.

28. A communication device, comprising:

a processing module configured to determine a channel estimation model; and
a transceiver module configured to send configuration information to a terminal device, wherein the configuration information is configured to indicate the terminal device to determine the channel estimation model,
wherein the transceiver module is further configured to send a PDSCH to the terminal device, wherein the PDSCH is configured to carry data and a DMRS signal; a number of resources of the PDSCH, an RE position of the data, and the DMRS signal are configured for the terminal device to determine model input data according to a first format requirement of input data of the channel estimation model, and determine a candidate channel estimation result according to the model input data and the channel estimation model.

29. A communication device, comprising a processor and a memory storing a computer program, wherein the processor executes the computer program stored in the memory to cause the device to perform the method according to any one of claims 1 to 16, or the processor executes the computer program stored in the memory to cause the device to perform the method according to any one of claims 17 to 26.

30. A communication device, comprising a processor and an interface circuit,

wherein the interface circuit is configured to receive code instructions and transmit the code instructions to the processor, and
the processor is configured to run the code instructions to perform the method according to any one of claims 1 to 16, or configured to run the code instructions to perform the method according to any one of claims 17 to 26.

31. A computer-readable storage medium configured to store instructions, wherein when the instructions are executed, the method according to any one of claims 1 to 16 is caused to be implemented, or when the instructions are executed, the method according to any one of claims 17 to 26 is caused to be implemented.

```
                                    ┌── 10
┌──────────────────────────────────┴──────────────┐
│  communication system                            │
│                                     ┌── 101       │
│   ┌─────────────────────────────────┴──────────┐ │
│   │         network side device                │ │
│   └───────────────────┬────────────────────────┘ │
│                       │             ┌── 102       │
│   ┌───────────────────┴─────────────┴──────────┐ │
│   │          terminal device                   │ │
│   └────────────────────────────────────────────┘ │
└──────────────────────────────────────────────────┘
```

FIG. 1

| | |
|---|---|
| determining a channel estimation model, and a first format requirement of input data of the channel estimation model | S21 |
| receiving a PDSCH sent by a network side device, the PDSCH is configured to carry data and DMRS signal | S22 |
| determining a model input data according to the first format requirement, a number of resources of the PDSCH, an RE position of the data, and the DMRS signal | S23 |
| determining a candidate channel estimation result according to the model input data and the channel estimation model | S24 |

FIG. 2

| | |
|---|---|
| determining a channel estimation model, and a format requirement of input data of the channel estimation model | S31 |
| receiving a PDSCH sent by a network side device, the PDSCH is configured to carry data and DMRS signal | S32 |
| determining a model input data according to the first format requirement, a number of resources of the PDSCH, an RE position of the data, and the DMRS signal | S33 |
| determining a candidate channel estimation result according to the model input data and the channel estimation model | S34 |
| determining a channel estimation result according to the RE position of the data and the candidate channel estimation result | S35 |

FIG. 3

receiving configuration information sent by the network side device; determining the channel estimation model according to the configuration information ⟩ S41

↓

receiving a PDSCH sent by a network side device, the PDSCH is configured to carry data and DMRS signal ⟩ S42

↓

determining a model input data according to the first format requirement, a number of resources of the PDSCH, an RE position of the data, and the DMRS signal ⟩ S43

↓

determining a candidate channel estimation result according to the model input data and the channel estimation model ⟩ S44

FIG. 4

obtaining a sample data set according to the first format requirement of input data of the channel estimation model; and training an initial channel estimation model according to the sample data set, and determining the channel estimation model ⟩ S51

↓

receiving a PDSCH sent by a network side device, the PDSCH is configured to carry data and DMRS signal ⟩ S52

↓

determining a model input data according to the first format requirement, a number of resources of the PDSCH, an RE position of the data, and the DMRS signal ⟩ S53

↓

determining a candidate channel estimation result according to the model input data and the channel estimation model ⟩ S54

FIG. 5

determining a second format requirement of output data of the channel estimation model; and determining an initial channel estimation model according to the first format requirement and/or the second format requirement; obtaining a sample data set according to the first format requirement and the second format requirement; and training the initial channel estimation model according to the sample data set, and determining the channel estimation model ⟩ S61

↓

receiving a PDSCH sent by a network side device, the PDSCH is configured to carry data and DMRS signal ⟩ S62

↓

determining a model input data according to the first format requirement, a number of resources of the PDSCH, an RE position of the data, and the DMRS signal ⟩ S63

↓

determining a candidate channel estimation result according to the model input data and the channel estimation model ⟩ S64

FIG. 6

determining a channel estimation model, and a first format requirement of input data of the channel estimation model  ⟋S71

↓

receiving a PDSCH sent by a network side device, the PDSCH is configured to carry data and DMRS signal  ⟋S72

↓

in response to determining that the number of the resources of the PDSCH in the time domain is less than 14 OFDM symbols, making up the number of the resources of the PDSCH to 14 OFDM symbols, taking a value of the RE position of the data to be 0, taking a value of a position corresponding to a made-up OFDM symbol to be 0, and obtaining the model input data; and/or in response to determining that the number of the resources of the PDSCH in the frequency domain is a plurality of RBs, splitting the plurality of RBs into a plurality of single RBs, taking a value of the RE position of the data of each single RB to be 0, and obtaining the model input data of the plurality of single RBs; and/or in response to determining that the number of the resources of the PDSCH in the spatial domain is a plurality of layers, splitting the plurality of layers into a plurality of single layers, taking a value of the RE position of the data of each single layer to be 0, and obtaining the model input data of the plurality of single layers  ⟋S73

↓

determining a candidate channel estimation result according to the model input data and the channel estimation model  ⟋S74

FIG. 7

determining a channel estimation model, and a first format requirement of input data of the channel estimation model  ⟋S81

↓

receiving a PDSCH sent by a network side device, the PDSCH is configured to carry data and DMRS signal  ⟋S82

↓

performing a channel estimation on a DMRS time-frequency position based on the DMRS and a DMRS sending signal, and obtaining an estimation channel value of a DMRS position; and obtaining the model input data according to the first format requirement, the number of resources of the PDSCH, the RE position of the data, and the estimation channel value of the DMRS position  ⟋S83

↓

determining a candidate channel estimation result according to the model input data and the channel estimation model  ⟋S84

FIG. 8

determining a channel estimation model  ⟋S91

↓

sending configuration information to a terminal device, and the configuration information is configured to indicate the terminal device to determine the channel estimation model  ⟋S92

↓

sending a PDSCH to the terminal device, in which the PDSCH is configured to carry data and a DMRS signal; a number of resources of the PDSCH, an RE position of the data, and the DMRS signal are configured for the terminal device to determine model input data according to a first format requirement of input data of the channel estimation model, and determine a candidate channel estimation result according to the model input data and the channel estimation model  ⟋S93

FIG. 9

obtaining a sample data set according to the first format requirement; and training an initial channel estimation model according to the sample data set, and determining the channel estimation model    ⟋ S101

↓

sending configuration information to a terminal device, and the configuration information is configured to indicate the terminal device to determine the channel estimation model    ⟋ S102

↓

sending a PDSCH to the terminal device, in which the PDSCH is configured to carry data and a DMRS signal; a number of resources of the PDSCH, an RE position of the data, and the DMRS signal are configured for the terminal device to determine model input data according to a first format requirement of input data of the channel estimation model, and determine a candidate channel estimation result according to the model input data and the channel estimation model    ⟋ S103

FIG. 10

determining a second format requirement of output data of the channel estimation model; determining an initial channel estimation model according to the first format requirement and/or the second format requirement; obtaining a sample data set according to the first format requirement and the second format requirement; and training the initial channel estimation model according to the sample data set, and determining the channel estimation model    ⟋ S111

↓

sending configuration information to a terminal device, and the configuration information is configured to indicate the terminal device to determine the channel estimation model    ⟋ S112

↓

sending a PDSCH to the terminal device, in which the PDSCH is configured to carry data and a DMRS signal; a number of resources of the PDSCH, an RE position of the data, and the DMRS signal are configured for the terminal device to determine model input data according to a first format requirement of input data of the channel estimation model, and determine a candidate channel estimation result according to the model input data and the channel estimation model    ⟋ S113

FIG. 11

—1

communication device

— 11

transceiver module

FIG. 12

FIG. 13

FIG. 14

## INTERNATIONAL SEARCH REPORT

International application No.

**PCT/CN2022/110710**

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

H04L; G06K; H04W; H04Q

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 人工智能, 信道, 估计, 解调, 资源, 训练, 格式, 样本, 模型, AI, DMRS, PDSCH, RE, estimation, channel, model, input, training, format

### C. DOCUMENTS CONSIDERED TO BE RELEVANT

| Category* | Citation of document, with indication, where appropriate, of the relevant passages | Relevant to claim No. |
|---|---|---|
| Y | CN 114781455 A (SUPER TELECOM CO., LTD. et al.) 22 July 2022 (2022-07-22) description, paragraphs [0001]-[0172] | 1-31 |
| Y | CN 113852583 A (JIANGSU HENGXIN ZHONGLIAN COMMUNICATION TECHNOLOGY CO., LTD.) 28 December 2021 (2021-12-28) description, paragraphs [0002]-[0154] | 1-31 |
| A | CN 114070675 A (ZHANXUN SEMICONDUCTOR (NANJING) CO., LTD.) 18 February 2022 (2022-02-18) entire document | 1-31 |
| A | WO 2022151598 A1 (HUAWEI TECHNOLOGIES CO., LTD.) 21 July 2022 (2022-07-21) entire document | 1-31 |
| A | HUAWEI et al. "Correction of power allocation for PDSCH demodulation requirements with DMRS (Rel-12)" *3GPP TSG-RAN WG4 Meeting #78bis, R4-162392*, 15 April 2016 (2016-04-15), entire document | 1-31 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 December 2022** | **21 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/110710**

| Patent document cited in search report | | | Publication date (day/month/year) | Patent family member(s) | | | Publication date (day/month/year) |
|---|---|---|---|---|---|---|---|
| CN | 114781455 | A | 22 July 2022 | None | | | |
| CN | 113852583 | A | 28 December 2021 | None | | | |
| CN | 114070675 | A | 18 February 2022 | None | | | |
| WO | 2022151598 | A1 | 21 July 2022 | WO | 2022151444 | A1 | 21 July 2022 |

Form PCT/ISA/210 (patent family annex) (January 2015)